# EUROPEAN PATENT APPLICATION

(11) **EP 4 604 318 A1**
(43) Date of publication of application: **20.08.2025**
(21) Application number: 23892050.8
(22) Date of filing: 16.11.2023
(51) Int. Cl.: H01Q 1/38, H01Q 1/24, H04M 1/02

(54) **ELECTRONIC DEVICE COMPRISING ANTENNA**

(30) Priority: 16.11.2022 KR 20220153641; 26.12.2022 KR 20220184884
(71) Applicant: Samsung Electronics Co., Ltd., Suwon-si, Gyeonggi-do 16677 (KR)
(72) Inventor: LEE, Sunghyup, Suwon-si, Gyeonggi-do 16677 (KR); YOO, Sungcheol, Suwon-si, Gyeonggi-do 16677 (KR); PARK, Jungsik, Suwon-si, Gyeonggi-do 16677 (KR); SON, Wangik, Suwon-si, Gyeonggi-do 16677 (KR)
(74) Representative: HGF
(86) International application number: PCT/KR2023/018493
(87) International publication number: WO 2024/106987

(57) **Abstract**

According to an exemplary embodiment of the present disclosure, an electronic device may comprise a front plate, a rear plate, a side part, a support part, a printed circuit board, at least one antenna element, and a bracket. The front plate may provide at least a part of the front surface of the electronic device. The rear plate may provide at least a part of the rear surface of the electronic device. The side part may provide at least a part of the side surface of the electronic device. The side part may include a conductive portion which provides a part of the side surface and a non-conductive portion which provides the other part of the side surface. The support part may be disposed between the front plate and the rear plate. The support part may be connected to the side part. The printed circuit board may include a first surface facing the non-conductive portion and a second surface facing the opposite direction to the first surface. The at least one antenna element may be arranged on the first surface or arranged within the printed circuit board to be closer to the first surface than to the second surface. The bracket may connect the printed circuit board and the support part to each other. The bracket may include a first portion where the printed circuit board is disposed and a second portion which extends from the first portion and is fixed to the support part through a screw. The support part may include a wall protruding toward the rear plate. The printed circuit board may be disposed between the non-conductive portion and the wall. The wall may support the first portion of the bracket.

## Description

### [Technical Field]

The disclosure relates to an electronic device including an antenna.

### [Background Art]

With the development of wireless communication technology, electronic devices are commonly used in daily life, and thus use of contents is increasing exponentially. Such electronic devices include a plurality of antennas to support various communication technologies. As the range of available applications expands, the number of antennas included in electronic devices is increasing.

The above-described information may be provided as related art for the purpose of helping to understand the disclosure. No claim or determination is made as to whether any of the foregoing may be applied as prior art with respect to the disclosure.

### [Disclosure of Invention]

### [Technical Problem]

While electronic devices are becoming slimmer, components for various functions are being added. Therefore, it becomes difficult to position an antenna in a limited space while securing coverage (or communication range) and radiation performance for a desired frequency band, while reducing the electrical effects with various elements within an electronic device.

Various embodiments of the disclosure provide an electronic device including an antenna for securing or improving coverage and/or antenna radiation performance.

### [Solution to Problem]

An exemplary embodiment of the disclosure provides an electronic device. The electronic device includes a front plate, a rear plate, a side surface portion, a support portion, a printed circuit board, at least one antenna element, and a bracket. The front plate provides at least a portion of the front surface of the electronic device. The rear plate provides at least a portion of the rear surface of the electronic device. The side surface portion provides at least a portion of the side surface of the electronic device. The side surface portion includes a conductive portion that provides a portion of the side surface and a non-conductive portion that provides another portion of the side surface. The support portion is positioned between the front plate and the rear plate. The support portion is connected to the side surface portion. The printed circuit board includes a first surface facing the non-conductive portion and a second surface facing away from the first surface. At least one antenna element is disposed on the first surface or disposed inside the printed circuit board closer to the first surface than to the second surface. The bracket connects the printed circuit board and the support portion. The bracket includes a first portion where the printed circuit board is disposed and a second portion extending from the first portion and fixed to the support portion via a screw. The support portion includes a wall protruding toward the rear plate. The printed circuit board is positioned between the non-conductive portion and the wall. The wall supports the first portion of the bracket.

An exemplary embodiment of the disclosure provides an electronic device. The electronic device includes a front plate, a rear plate, a side surface portion, a support portion, a printed circuit board, at least one antenna element, a communication circuit, and a bracket. The front plate provides at least a portion of the front surface of the electronic device. The rear plate provides at least a portion of the rear surface of the electronic device. The side surface portion provides at least a portion of the side surface of the electronic device. The side surface portion includes a conductive portion that provides a portion of the side surface and a non-conductive portion that provides another portion of the side surface. The support portion is positioned between the front plate and the rear plate. The support portion is connected to the side surface portion. The printed circuit board includes a first surface facing the non-conductive portion and a second surface facing away from the first surface. At least one antenna element is disposed on the first surface or disposed inside the printed circuit board closer to the first surface than to the second surface. The communication circuit is disposed on the second surface. The communication circuit is configured to transmit and/or receive a mmWave wireless signal via at least one antenna element. The bracket connects the printed circuit board and the support portion. The bracket includes a first portion where the printed circuit board is disposed and a second portion extending from the first portion and fixed to the support portion via a screw. The support portion includes a wall protruding toward the rear plate. The printed circuit board is positioned between the non-conductive portion and the wall. The wall supports the first portion.

### [Advantageous Effects of Invention]

In an electronic device including an antenna according to an exemplary embodiment of the present disclosure, a printed circuit board with at least one antenna element disposed thereon may be stably positioned close to a non-conductive portion of the housing exterior. Thus, coverage and/or antenna radiation performance may be ensured or improved.

In addition, effects that may be obtained or predicted by various embodiments of the disclosure will be directly or implicitly disclosed in the detailed description of the embodiments of the disclosure. For example, various effects predicted according to various embodiments of the disclosure will be disclosed in the following detailed description.

### [Brief Description of Drawings]

The above and other aspects, features, and advantages of specific embodiments of the disclosure will become more apparent from the following detailed description taken in conjunction with the accompanying drawings.
FIG. 1 is a block diagram of an electronic device according to an embodiment of the disclosure in a network environment.
FIG. 2 is a block diagram illustrating an electronic device in a network environment including a plurality of cellular networks, according to an embodiment of the disclosure.
FIG. 3 illustrates an electronic device according to an embodiment of the disclosure.
FIGS. 4 and 5 illustrate an antenna module according to an embodiment of the disclosure.
FIG. 6 illustrates electronic devices according to various embodiments of the disclosure.
FIGS. 7 and 8 are exploded perspective views of the electronic device according to an embodiment of the disclosure.
FIG. 9 is a perspective view of an antenna module assembly according to an embodiment of the disclosure.
FIG. 10 is a view illustrating a combination of a frame, a battery, an antenna module assembly, a flexible printed circuit board, and a second adhesive member according to an embodiment of the present disclosure.
FIG. 11 is a perspective view illustrating a combination of a frame, an antenna module assembly, and a battery according to an embodiment of the present disclosure.
FIG. 12 is a cross-sectional view of an electronic device according to an embodiment of the disclosure taken along line A-A' in FIG. 10.
FIG. 13 is a cross-sectional view of the electronic device according to an embodiment of the disclosure taken along line C-C' in FIG. 10.
FIG. 14 is a cross-sectional view of the electronic device according to an embodiment of the disclosure taken along line D-D' in FIG. 10.
FIG. 15 is a cross-sectional view of the electronic device according to an embodiment of the disclosure taken along line E-E'.
FIG. 16 is a cross-sectional view of the electronic device according to an embodiment of the disclosure taken along line F-F'.
FIGS. 17 and 18 are cross-sectional views each illustrating the assembly of an antenna module assembly and a frame according to an embodiment of the present disclosure.
FIG. 19 illustrates a cross-sectional view of an electronic device according to an embodiment of the present disclosure, a cross-sectional view of an electronic device according to a comparative example, heat maps illustrating electromagnetic wave energy (or wave energy) radiated from the electronic device according to the embodiment, and heat maps illustrating electromagnetic wave energy radiated from the electronic device according to the comparative example.

### [Mode for the Invention]

Hereinafter, various example embodiments of the disclosure disclosed herein will be described in greater detail with reference to the accompanying drawings.

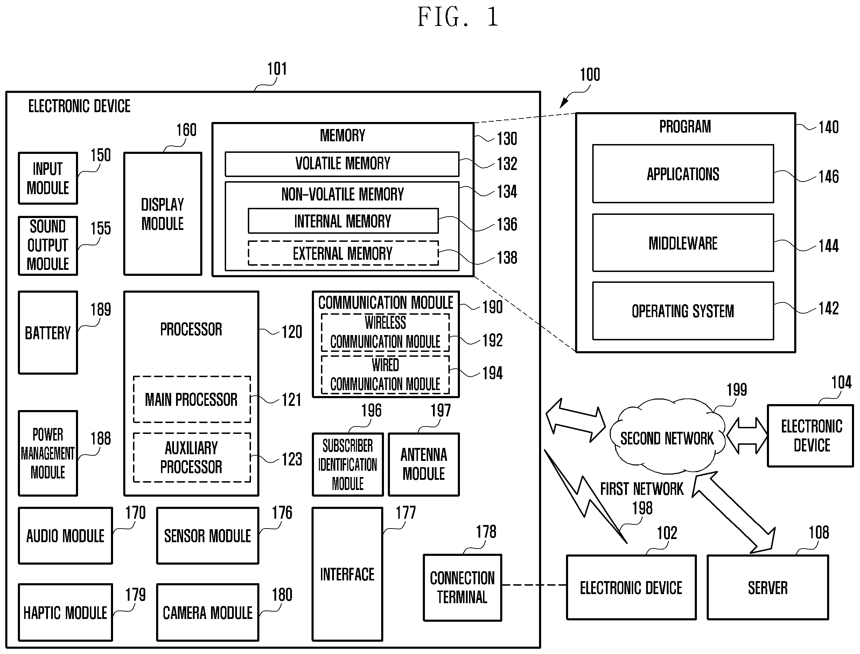

FIG. 1 is a block diagram of an electronic device 101 in a network environment 100 according to an embodiment of the disclosure.

Referring to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). The electronic device 101 may communicate with the external electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In various embodiments of the disclosure, at least one (e.g., the connection terminal 178) of the components may be omitted from the electronic device 101, or one or more other components may be added in the electronic device 101. In various embodiments of the disclosure, some of the components may be implemented as single integrated circuitry. For example, the sensor module 176, the camera module 180, or the antenna module 197 may be implemented as embedded in single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment of the disclosure, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include touch circuitry (e.g., a touch sensor) adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. The interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). The connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, ISPs, or flashes.

The power management module 188 may manage power supplied to or consumed by the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5th generation (5G) network, a next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4th generation (4G) network, and next-generation communication technology, e.g., new radio (NR) access technology. The NR access technology may support highspeed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., a mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the electronic device 101, an external electronic device (e.g., external the electronic device 104), or a network system (e.g., the second network 199). According to an embodiment of the disclosure, the wireless communication module 192 may support a peak data rate for implementing eMBB (e.g., 20Gbps or more), loss coverage for implementing mMTC (e.g., 164dB or less), or U-plane latency for realizing URLLC (e.g., 0.5ms or less for each of downlink (DL) and uplink (UL) or 1ms or less for round trip).

The antenna module 197 may transmit or receive a signal or power to or from the outside (e.g., the external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the external electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-low delay service using, for example, distributed computing or MEC. In another embodiment of the disclosure, the external electronic device 104 may include an internet of things (IoT) device. The server 108 may be an intelligent server using machine learning and/or neural networks. According to an embodiment of the disclosure, the external electronic device 104 or the server 108 may be included in the second network 199. The electronic device 101 may be applied to an intelligent service (e.g., smart home, smart city, smart car, or healthcare) based on 5G communication technology or IoT-related technology.

An electronic device according to an embodiment of the disclosure may be one of various types of electronic devices. The electronic devices may include a portable communication device (e.g., a smartphone), a computer device, a portable multimedia device, a portable medical device, a camera, a wearable device, or a home appliance. However, the electronic device is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). If an element (e.g., a first element) is referred to, with or without the term "operatively" or "communicatively," as "coupled with," "coupled to," "connected with," or "connected to" another element (e.g., a second element), the element may be coupled with the other element directly (e.g., wiredly), wirelessly, or via a third element.

The term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORETM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

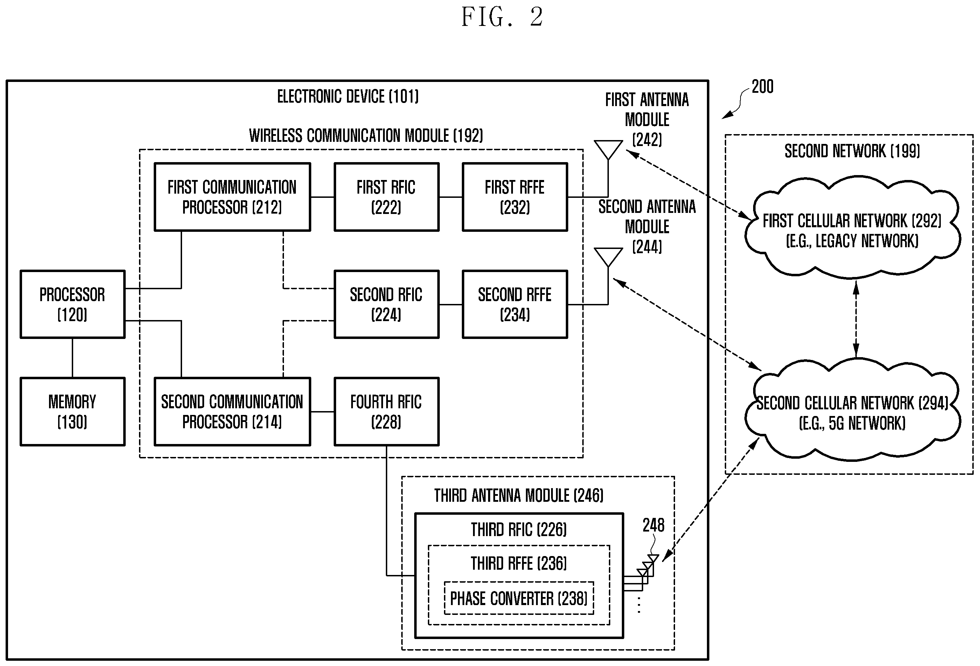

FIG. 2 is a block diagram 200 illustrating an electronic device 101 in a network environment including a plurality of cellular networks, according to an embodiment of the disclosure.

Referring to FIG. 2, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and/or an antenna 248. The electronic device 101 may include a processor 120 and memory 130. The second network 199 may include a first cellular network 292 and a second cellular network 294. According to another embodiment, the electronic device 101 may further include at least one of the components illustrated in FIG. 1, and the second network 199 may further include one or more other networks. According to an embodiment, the first communication processor 212, the second communication processor 214, the first RFIC 222, the second RFIC 224, the fourth RFIC 228, the first RFFE 232, and the second RFFE 234 may constitute at least a portion of an RF communication module 192. According to another embodiment, the fourth RFIC 228 may be omitted, or may be included as a portion of the third RFIC 226.

The first communication processor 212 may establish a communication channel in a band to be used for RF communication with the first cellular network 292, and may support legacy network communication via the established communication channel. According to various embodiments, the first cellular network may be a legacy network including a 2^{nd} generation (2G), 3G, 4G, or long-term evolution (LTE) network. The second communication processor 214 may establish a communication channel corresponding to a predetermined band (e.g., about 6 GHz to about 60 GHz) in a band to be used for RF communication with the second cellular network 294, and may support 5G network communication via the established communication channel. According to various embodiments, the second cellular network 294 may be a 5G network defined in the 3GPP. In addition, according to an embodiment, the first communication processor 212 or the second communication processor 214 may establish a communication channel corresponding to another predetermined band (e.g., about 6 GHz or lower) in the band to be used for RF communication with the second cellular network 294, and may support 5G network communication through the established communication channel. According to an embodiment, the first communication processor 212 and the second communication processor 214 may be implemented in a single chip or in a single package. According to various embodiments, the first communication processor 212 or the second communication processor 214 may be formed in a single chip or a single package with the processor 120, an auxiliary processor 123, or a communication module 190.

During transmission, the first RFIC 222 may convert a baseband signal generated by the first communication processor 212 into an RF signal of about 700 MHz to about 3 GHz to be used in the first cellular network 292 (e.g., a legacy network). During reception, an RF signal may be acquired from the first cellular network 292 (e.g., the legacy network) through an antenna (e.g., the first antenna module 242), and may be pre-processed through an RFFE (e.g., the first RFFE 232). The first RFIC 222 may convert the pre-processed RF signal into a baseband signal to be processed by the first communication processor 212.

During transmission, the second RFIC 224 may convert the baseband signal generated by the first communication processor 212 or the second communication processor 214 into an RF signal in a Sub6 band (e.g., about 6 GHz or lower) (hereinafter, referred to as "5G Sub6 RF signal") to be used in the second cellular network 294 (e.g., a 5G network). During reception, the 5G Sub6 RF signal may be acquired from the second cellular network 294 (e.g., a 5G network) through an antenna (e.g., the second antenna module 244), and may be pre-processed through an RFFE (e.g., the second RFFE 234). The second RFIC 224 may convert the pre-processed 5G Sub6 RF signal into a baseband signal so as to be processed by a corresponding one of the first communication processor 212 and the second communication processor 214.

The third RFIC 226 may convert the baseband signal generated by the second communication processor 214 into an RF signal in a 5G Above6 band (e.g., about 6 GHz to about 60 GHz) (hereinafter, referred to as a "5G Above6 RF signal") to be used in the second cellular network 294 (e.g., a 5G network). During reception, the 5G Above6 RF signal may be acquired from the second cellular network 294 (e.g., a 5G network) through an antenna (e.g., the second antenna module 248), and may be pre-processed through the third RFFE 236. The third RFIC 226 may convert the pre-processed 5G Above6 RF signal into a baseband signal to be processed by the second communication processor 214. According to an embodiment, the third RFFE 236 may be provided as a portion of the third RFIC 226.

According to an embodiment, the electronic device 101 may include a fourth RFIC 228 separately from or as at least a portion of the third RFIC 226. In this case, the fourth RFIC 228 may convert the baseband signal generated by the second communication processor 214 into an RF signal (hereinafter, referred to as an "IF signal") in an intermediate-frequency band (e.g., about 9 GHz to about 11 GHz), and may then deliver the IF signal to the third RFIC 226. The third RFIC 226 may convert the IF signal into a 5G Above6 RF signal. During reception, the 5G Above6 RF signal may be acquired from the second cellular network 294 (e.g., a 5G network) via an antenna (e.g., the antenna 248) and may be converted into an IF signal by the third RFIC 226. The fourth RFIC 228 may convert the IF signal into a baseband signal to be capable of being processed by the second communication processor 214.

According to an embodiment, the first RFIC 222 and the second RFIC 224 may be implemented as at least a portion of a single chip or a single package. According to an embodiment, the first RFFE 232 and the second RFFE 234 may be implemented as at least a portion of a single chip or a single package. According to an embodiment, at least one of the first antenna module 242 and the second antenna module 244 may be omitted, or may be combined with another antenna module to process RF signals of a plurality of corresponding bands.

According to an embodiment, the third RFIC 226 and the antenna 248 may be disposed on the same substrate so as to provide a third antenna module 246. For example, the RF communication module 192 or the processor 120 may be placed on a first substrate (e.g., a main PCB). In such a case, the third RFIC 226 may be disposed on a partial area (e.g., the top surface) of a second substrate (e.g., a sub-PCB) separate from the first substrate, and the antenna 248 may be disposed on another partial area (e.g., the bottom surface), thereby providing the third antenna module 246. By disposing the third RFIC 226 and the antenna 248 on the same substrate, the length of the transmission line may be reduced therebetween. Through this, it is possible to reduce the loss (e.g., attenuation) of signals in a high-frequency band (e.g., about 6 GHz to about 60 GHz) to be used for, for example, 5G network communication by the transmission line. As a result, the electronic device 101 is able to improve the quality or speed of communication with the second cellular network 294 (e.g., a 5G network).

According to an embodiment, the antenna 248 may be configured as an antenna array that includes a plurality of antenna elements capable of being used for beamforming. In this case, the third RFIC 226 may include a plurality of phase converters 238 corresponding to the plurality of antenna elements, for example, as a portion of the third RFFE 236. During transmission, each of the plurality of phase shifters 238 may convert the phase of a 5G Above6 RF signal to be transmitted to the outside of the electronic device 101 (e.g., a base station of a 5G network) via a corresponding antenna element. During reception, each of the plurality of phase shifters 238 may convert the phase of the 5G Above6 RF signal received from the outside into the same or substantially the same phase via the corresponding antenna element. This enables transmission or reception through beamforming between the electronic device 101 and the outside.

The second cellular network 294 (e.g., a 5G network) may be operated independently from the first cellular network 292 (e.g., a legacy network) (e.g., Stand-Alone (SA)), or may be operated in the state of being connected to the first network 592 (e.g., Non-Stand-Alone (NSA)). For example, a 5G network may include only an access network (e.g., a 5G radio access network (RAN) or a next-generation RAN (NG RAN)) but may not include a core network (e.g., a next-generation core (NGC)). In this case, after accessing the access network of the 5G network, the electronic device 101 may access an external network (e.g., the Internet) under the control of the core network (e.g., an evolved packed core (EPC)) of a legacy network. Protocol information for communication with a legacy network (e.g., LTE protocol information) or protocol information for communication with a 5G network (e.g., new radio (NR) protocol information) may be stored in the memory 230, and may be accessed by another component (e.g., the processor 120, the first communication processor 212, or the second communication processor 214).

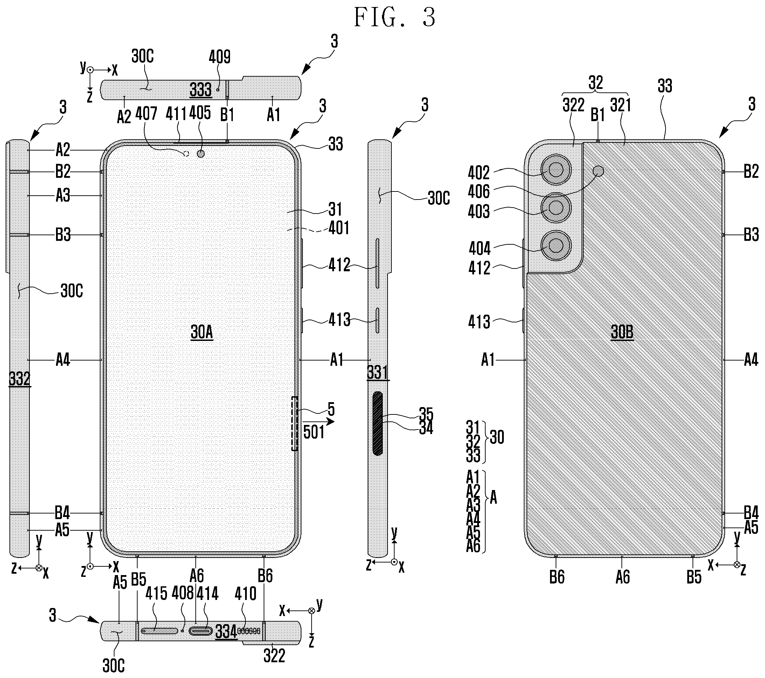

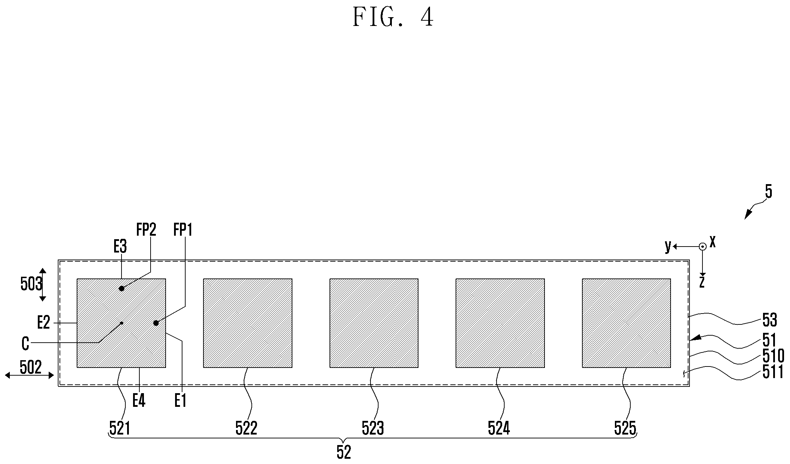

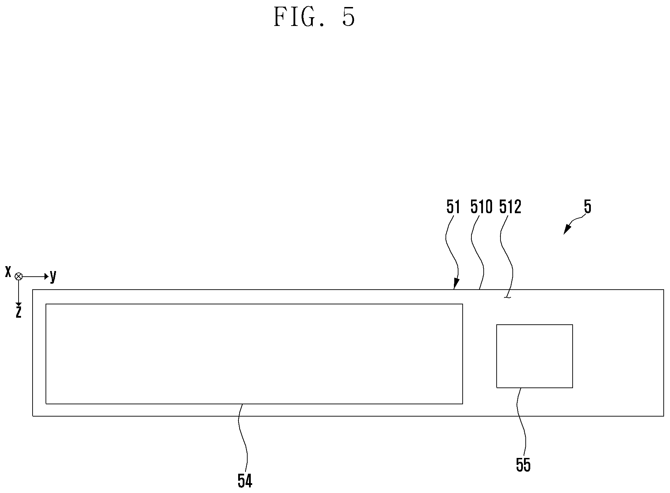

FIG. 3 illustrates an electronic device 3 according to an embodiment of the disclosure. FIGS. 4 and 5 illustrate an antenna module 5 according to an embodiment of the disclosure.

In various embodiments of the disclosure, for convenience of description, the direction in which the front surface 30A of the electronic device 3 is oriented or a display area included in the electronic device 3 is visually exposed is defined as the +z-axis direction, and the direction in which the rear surface 30B of the electronic device 10B is oriented is defined as the -z-axis direction.

Referring to FIG. 3, an electronic device 3 (e.g., the electronic device 101 of FIG. 1) may include a housing 30. The housing 30 may provide, for example, the front surface 30A of the electronic device 3, the rear surface 30B of the electronic device 3, and the side surface 30C of the exemplary electronic device 3. In various embodiments, the housing 30 may refer to a structure that provides at least a portion of the front surface 30A, the rear surface 30B, and the side surface 30C.

According to an embodiment, the housing 30 may include a front plate (or a front cover, a first cover, or a first plate) 31, a rear plate (or a rear cover, a second cover, or a second plate) 32, and/or a side (or a side surface portion, a side surface member, a side surface bezel structure, or a side wall portion) 33.

According to an embodiment, the front plate 31 may provide at least a portion of the front surface 30A of the electronic device 3. At least a portion of the front plate 31 may be substantially transparent. The front plate 31 may include, for example, a glass plate including various coating layers, or a polymer plate.

According to an embodiment, the rear plate 32 may provide at least a portion of the rear surface 30B of the electronic device 3. The rear plate 32 may be substantially opaque. The rear plate 32 may be made of, for example, coated or colored glass, ceramic, polymer, metal (e.g., aluminum, stainless steel (STS), or magnesium), or a combination of two or more of these materials.

According to an embodiment, the side 33 may provide at least a portion of the side surface 30B of the electronic device 3. The side 33 may include a metallic material and/or a non-metallic material (e.g., polymer).

According to an embodiment, the side 33 may include a first side (or, a first side surface portion, a first side wall, a first side wall portion, a first bezel, or a first bezel portion) 331, a second side (or, a second side surface portion, a second side wall, a second side wall portion, a second bezel, or a second bezel portion) 332, a third side (or a third side surface portion, a third side wall, a third side wall portion, a third bezel, or a third bezel portion) 333, and/or a fourth side (or, a fourth side surface portion, a fourth side wall, a fourth side wall portion, a fourth bezel, or a fourth bezel portion) 334.

According to an embodiment, when viewed from above the front plate 31 (e.g., in the -z-axis direction), the first side 331 may be spaced apart from the second side 332 in the +x-axis direction and may be substantially parallel to the second side 332. The first side 331 may provide a first side surface corresponding to the x-axis direction in the side surface 30C of the electronic device 3. The second side 332 may provide a second side surface corresponding to the x-axis direction in the side surface 30C of the electronic device 3.

According to an embodiment, the third side 333 may interconnect one end portion of the first side 331 and one end portion of the second side 332. The fourth side 334 may interconnect the other end portion of the first side 331 and the other end portion of the second side 332. When viewed from above the front plate 31, the third side 333 may be spaced apart from the fourth side 334 in the +y-axis direction and may be substantially parallel to the fourth side 334. The third side 333 may provide a third side surface of the electronic device 3 corresponding to the +y-axis direction in the side surface 30C of the electronic device 3. The fourth side 334 may provide a fourth side surface of the electronic device 3 corresponding to the -y-axis direction in the side surface 30C of the electronic device 3.

According to an embodiment, a first corner where the first side 331 and the third side 333 are connected, a second corner where the first side 331 and the fourth side 334 are connected, a third corner where the second side 332 and the third side 333 are connected, and/or a fourth corner where the second side 332 and the fourth side 334 are connected may be implemented in a smoothly curved shape.

According to an embodiment, the side 33 may include a first metal portion A1, a second metal portion A2, a third metal portion A3, a fourth metal portion A4, a fifth metal portion A5, a sixth metal portion A6, a first insulation portion B1, a second insulation portion B2, a third insulation portion B3, a fourth insulation portion B4, a fifth insulation portion B5, and/or a sixth insulation portion B6. The first insulation portion B1 may be disposed in a first segmentation portion between the first metal portion A1 and the second metal portion A2. The first metal portion A1 and the second metal portion A2 may be physically separated with the first insulation portion B1 interposed therebetween. The first insulation portion B1 may be disposed in the first segmentation portion between the first metal portion A1 and the second metal portion A2. The first metal portion A1 and the second metal portion A2 may be physically separated with the first insulation portion B1 interposed therebetween. The second insulation portion B2 may be disposed in a second segmentation portion between the second metal portion A2 and the third metal portion A3. The second metal portion A2 and the third metal portion A3 may be physically separated with the second insulation portion B2 interposed therebetween. The third insulation portion B3 may be disposed in a third segmentation portion between the third metal portion A3 and the fourth metal portion A4. The third metal portion A3 and the fourth metal portion A4 may be physically separated with the third insulation portion B3 interposed therebetween. The fourth insulation portion B4 may be disposed in a fourth segmentation portion between the fourth metal portion A4 and the fifth metal portion A5. The fourth metal portion A4 and the fifth metal portion A5 may be physically separated with the fourth insulation portion B4 interposed therebetween. The fifth insulation portion B5 may be disposed in a fifth segmentation portion between the fifth metal portion A5 and the sixth metal portion A6. The fifth metal portion A5 and the sixth metal portion A6 may be physically separated with the fifth insulation portion B5 interposed therebetween. The sixth insulation portion B6 may be disposed in a sixth segmentation portion between the first metal portion A1 and the sixth metal portion A6. The first metal portion A1 and the sixth metal portion A6 may be physically separated with the sixth insulation portion B6 interposed therebetween.

According to an embodiment, the side surface 30C of the electronic device 3 may include surface areas provided by the plurality of metal portions A1, A2, A3, A4, A5, and A6 and surface areas provided by the plurality of insulation portions B1, B2, B3, B4, B5, and B6. The surface areas provided by the plurality of metal portions A1, A2, A3, A4, A5, and A6 and the surface areas provided by the plurality of insulation portions B1, B2, B3, B4, B5, and B6 may be smoothly connected without a substantial height difference.

According to an embodiment, a combination of the plurality of metal portions A1, A2, A3, A4, A5, and A6 may be defined or interpreted as a side surface metal A (or a side surface metal body, a side surface metal structure, an outer metal body, an outer metal structure, a side surface conductor, a side surface conductive structure, an outer conductor, or an outer conductive structure).

According to various embodiments, the positions, shapes, or number of the plurality of metal portions included in the side 33 and the positions or number of the plurality of insulation portions provided to correspond to the plurality of metal portions may vary and are not limited to the illustrated examples.

According to an embodiment, the rear plate 32 may include a first rear plate 321 and a second rear plate 322 connected to the first rear plate 321. The first rear plate 321 may provide a partial surface area of the rear surface 30B of the electronic device 3, and the second rear plate 322 may provide another partial surface area of the rear surface 30B of the electronic device 3.

According to an embodiment, a periphery of the second rear plate 322 may include a first periphery connected to the first rear plate 321 and a second periphery connected to the side 33.

According to an embodiment, a partial surface area of the rear surface 30B of the electronic device 3 provided by the second rear plate 322 may be positioned higher in the direction in which the rear surface 30B of the electronic device 3 is oriented (e.g., the -z-axis direction) than another partial surface area of the rear surface 30B of the electronic device 3 provided by the first rear plate 321.

According to an embodiment, the second periphery of the second rear plate 322 connected to the side 33 may extend to correspond to the third corner where the first side 331 and the third side 333 are connected, a portion of the first side 331 extending from the third corner, and a portion of the third side 333 extending from the third corner. The third corner, the portion of the first side 331 extending from the third corner, and the portion of the third side 333 extending from the third corner may be positioned higher in the direction in which the rear surface 30B of the electronic device 3 is oriented (e.g., the -z-axis direction) than other portions of the side 33 to correspond to the second periphery of the second rear plate 322.

According to various embodiments, an integrated structure or member including the second rear plate 322 and the side 33 may be provided. For example, the second rear plate 322 may be connected to a metal portion (e.g., the first metal portion A1) included in the side 33 and may include the same metallic material as the metal portion.

According to various embodiments, a partial surface area of the rear surface 30B of the electronic device 3 provided by the first rear plate 321 and another partial surface area of the rear surface 30B of the electronic device 3 provided by the second rear plate 322 may be implemented such that there is substantially no height difference therebetween (not separately illustrated).

According to various embodiments, an integrated rear plate (not separately illustrated) replacing the first rear plate 321 and the second rear plate 322 may be provided.

According to an embodiment, the electronic device 3 may include a display module 401, a first camera module 402, a second camera module 403, a third camera module 404, a fourth camera module 405, a first light-emitting module 406, a second light-emitting module (not separately illustrated), a first sensor module 407, a second sensor module (not separately illustrated), a first audio input module (not separately illustrated), a second audio input module (not separately illustrated), a first audio output module (not separately illustrated), a second audio output module (not separately illustrated), a first key input module 412, a second key input module 413, a first connection terminal 414, a second connection terminal (not separately illustrated), and/or an antenna module 5. The electronic device 3 may omit at least one of the above-mentioned components or may additionally include other components.

According to an embodiment, the display area (or active area) of the display module 401 may be visible through the front plate 31.

According to an embodiment, the electronic device 3 may be implemented so that the display area, which is visible through the front plate 31, as large as possible (e.g., a large screen or full screen). For example, the display module 401 may be implemented to have a periphery having substantially the same shape as the periphery of the front plate 31.

According to an embodiment, the first camera module 402, the second camera module 403, the third camera module 404, or the fourth camera module 405 may include one or more lenses, one or more image sensors, and/or an image signal processor (ISP).

According to an embodiment, the first camera module 402, the second camera module 403, and the third camera module 404 may be provided to correspond to the rear surface 30B of the electronic device 3. The first camera module 402, the second camera module 403, or the third camera module 404 may be defined or interpreted as a "rear camera module."

According to an embodiment, the first camera module 402 is positioned to correspond to a first camera hole provided in the second rear plate 322 and is visible from the exterior of the electronic device 1 through the first camera hole. The second camera module 403 is positioned to correspond to a second camera hole provided in the second rear plate 322 and is visible from the outside of the electronic device 3 through the second camera hole. The third camera module 403 is positioned to correspond to a third camera hole provided in the second rear plate 322 and is visible from the outside of the electronic device 3 through the third camera hole. In various embodiments, the second rear plate 322 may be implemented to provide a first light-transmitting area replacing the first camera hole, a second light-transmitting area replacing the second camera hole, and/or a third light-transmitting area replacing the third camera hole. In various embodiments, the second rear plate 322 may be referred to as a "camera deco portion."

According to an embodiment, when viewed from above of the rear surface 30B of the electronic device 3 (e.g., when viewed in the +z-axis direction), the first camera module 402, the second camera module 403, and the third camera module 404 may be aligned in a direction from the third side 333 toward the fourth side 334 (e.g., the -y-axis direction). When viewed from above the rear surface 30B of the electronic device 3, the first camera module 402 may be positioned to correspond to the first corner where the first side 331 and the third side 333 are connected, and the second camera module 403 may be positioned between the first camera module 402 and the third camera module 404.

According to various embodiments, the relative positions among the first camera module 402, the second camera module 403, and the third camera module 404, and the shape of the second rear plate 322 corresponding to the relative positions may vary (not separately illustrated) without being limited to the illustrated example. The number of camera modules corresponding to the second rear plate 322 may vary (not separately illustrated) without being limited to the illustrated example.

According to various embodiments, the first camera module 402, the second camera module 403, or the third camera module 404 may include a wide-angle camera module, a telephoto camera module, a color camera module, a monochrome camera, or an IR camera (e.g., a time-of-flight (TOF) camera or a structured light camera module).

According to an embodiment, the first camera module 402, the second camera module 403, and the third camera module 404 may have different properties (e.g., angles of view) or functions.

According to various embodiments, the first camera module 402, the second camera module 403, or the third camera module 404 may provide different angles of view (or lenses with different angles of view). The electronic device 3 may selectively use the angle of view of the first camera module 402, the second camera module 403, or the third camera module 404 based on a user's selection regarding the angle of view.

According to an embodiment, the fourth camera module 405 may be positioned inside the electronic device 3 to correspond to the front surface 30A of the electronic device 3. External light may pass through the front plate 31 and may reach the fourth camera module 405. The fourth camera module 405 may be defined or interpreted as a "front camera module."

According to an embodiment, the fourth camera module 405 may be positioned closer to the third side 333 than to the fourth side 334 when viewed from above the front surface 30A of the electronic device 3 (e.g., when viewed in the -z axis direction). When viewed from above the front 30A of the electronic device 3, the separation distance of the fourth camera module 405 from the first side 331 and the separation distance of the fourth camera module 405 from the second side 332 may be substantially the same.

According to an embodiment, the fourth camera module 405 may be positioned to be aligned with an opening provided in the display area of the display module 401 or may be at least partially inserted into the opening. External light may reach the fourth camera module 405 through the front plate 31 and the opening in the display area. The opening of the display area aligned with or overlapping the fourth camera module 405 may be provided in the form of a hole. In various embodiments, when viewed from above on the front surface 30A of the electronic device 3, the opening of the display area aligned with or overlapping the fourth camera module 405 may be provided as a notch (not separately illustrated).

According to various embodiments, the fourth camera module 405 may overlap the display area of the display module 401 when viewed from above on the front surface 30A of the electronic device 3. The fourth camera module 405 may be positioned on the rear surface of the display area or below or beneath the display area. When viewed from the outside of the electronic device 3, the fourth camera module 405 or the position of the fourth camera module 405 may not be substantially visually distinguished (or exposed). The fourth camera module 405 may include, for example, a hidden behind-display camera (e.g., an under-display camera (UDC)). External light may pass through the front plate 31 and the display area to reach the fourth camera module 405.

According to various embodiments, the fourth camera module 405 may be positioned to be aligned with a recess (not separately illustrated) provided in the rear surface of the display area or may be at least partially inserted into the recess. When viewed from the outside of the electronic device 3, the fourth camera module 405 or the position of the fourth camera module 405 may not be substantially visually distinguished (or exposed).

According to various embodiments, although not separately illustrated, the portion of the display area that at least partially overlaps the fourth camera module 405 may include a pixel structure and/or a wiring structure that is different from other areas. The pixel structure and/or the wiring structure provided in the portion of the display area that at least partially overlaps the fourth camera module 405 may be implemented to reduce light loss between the outside of the electronic device 3 and the fourth camera module 405. The portion of the display area that at least partially overlaps the first sensor module 405 may have, for example, a different pixel density (e.g., the number of pixels per unit area) from other partial areas. For example, the portion of the display area that at least partially overlaps the fourth camera module 405 may not substantially include a plurality of pixels.

According to an embodiment, the first light-emitting module 406 may be provided to correspond to the rear surface 30B of the electronic device 1. The first light-emitting module 406 may include a light source for the first camera module 402, the second camera module 403, and/or the third camera module 404. The first light-emitting module 406 may include, but is not limited to, an LED, an IR LED, or a xenon lamp.

According to an embodiment, the first light-emitting module 406 may be positioned to correspond to the flash hole (or light transmission area) provided in the first rear plate 321.

According to various embodiment, the first light-emitting module 406 may be positioned to correspond to the flash hole (or light transmission area) provided in the first rear plate 322.

According to an embodiment, a second light-emitting module (e.g., an LED, an IR LED, or a xenon lamp) (not separately illustrated) may be provided to correspond to the front surface 30A of the electronic device 3. The second light-emitting module may provide status information of the electronic device 3 in the form of light. In various embodiments, the second light-emitting module may provide a light source that operates in conjunction with the operation of the fourth camera module 405.

According to an embodiment, the first sensor module 407 may be positioned inside the electronic device 3 to correspond to the front surface 30A of the electronic device 3. The first sensor module 407 may include, for example, an optical sensor (e.g., a proximity sensor or an illuminance sensor). The position of first terminal units 407 may vary without being limited to the illustrated example.

According to an embodiment, the first sensor module 407 may overlap the display area of the display module 401 when viewed from above the front surface 30A of the electronic device 3. The first sensor module 407 may be positioned on the rear surface of the display area or below or beneath the display area. When viewed from the outside of the electronic device 3, the first sensor module 407 or the position of the first sensor module 407 may not be substantially visually distinguished (or exposed). External light may pass through the front plate 31 and the display area to reach the first sensor module 407.

According to various embodiments, the first sensor module 407 may be positioned to be aligned with a recess (not separately illustrated) provided in the rear surface of the display area or may be at least partially inserted into the recess. When viewed from the outside of the electronic device 3, the first sensor module 407 or the position of the first sensor module 407 may not be substantially visually distinguished (or exposed).

According to various embodiments, although not separately illustrated, the portion of the display area of the display module 401 that at least partially overlaps the first sensor module 407 may include a pixel structure and/or a wiring structure that is different from other areas. The pixel structure and/or the wiring structure provided in the portion of the display area that at least partially overlaps the first sensor module 407 may be implemented to reduce light loss between the outside of the electronic device 3 and the first sensor module 407. For example, the portion of the display area that at least partially overlaps the first sensor module 407 may have a pixel density (e.g., the number of pixels per unit area) that is different from other partial areas. For example, the portion of the display area that at least partially overlaps the first sensor module 407 may not substantially include a plurality of pixels.

According to various embodiments, the first sensor module 407 may be positioned to be aligned with an opening provided in the display area of the display module 401 or may be at least partially inserted into the opening. External light may pass through the front plate 31 and the opening in the display area to reach the first sensor module 407. The opening in the display area aligned with or overlapping the first sensor module 407 may be provided in the form of a hole. In various embodiments, when viewed from above on the front surface 30A of the electronic device 3, the opening of the display area aligned with or overlapping the first sensor module 407 may be provided as a notch (not separately illustrated).

According to various embodiments, the second sensor module (not separately illustrated) may include an optical, electrostatic, or ultrasonic biometric sensor (e.g., a fingerprint sensor). The second sensor module may be disposed in the electronic device 3 in at least partially the same as or similar to the first sensor module 407. The electronic device 3 may further include one or more third sensor modules (not separately illustrated) provided at various other positions.

According to an embodiment, the first sound input module (not separately illustrated) may include a first microphone. The second sound input module (not separately illustrated) may include a second microphone. The first microphone may be positioned inside the electronic device 3 to correspond to the first microphone hole 408 provided in the fourth side 334. The second microphone may be positioned inside the electronic device 3 to correspond to the second microphone hole 409 provided in the third side 333. The positions or number of microphones and microphone holes 408 or 409 corresponding to the microphones may vary (not separately illustrated) without being limited to the illustrated example.

According to an embodiment, the first sound output module (not separately illustrated) may include a first speaker (not separately illustrated) used to reproduce data related to multimedia or recording. The first speaker may be positioned inside the electronic device 3 to correspond to the first speaker hole 410 provided in the fourth side 334. The positions or number of first sound output modules including the first speaker may vary (not separately illustrated).

According to an embodiment, the second sound output module (not separately illustrated) may include a second speaker (e.g., a receiver for a call) (not separately used) used for a call. The second speaker may be positioned inside the electronic device 3 to correspond to the second speaker hole 411 (e.g., an opening in the form of a through hole or a notch) provided in the front plate 31 or the third side 333 between the front plate 31 and the third side 333. The positions or number of second sound output modules including the second speaker may vary (not separately illustrated).

According to various embodiments, the first speaker may include a piezo speaker, in which case the first speaker hole 410 may be omitted.

According to various embodiments, the second speaker may include a piezo speaker, in which case the second speaker hole 411 may be omitted.

According to various embodiments, a first single hole (not separately illustrated) may be provided to replace the first microphone hole 408 and the first speaker hole 410.

According to various embodiments, a second single hole (not separately illustrated) may be provided to replace the second microphone hole 409 and the second speaker hole 411.

According to an embodiment, the first key input module 412 or the second key input module 413 may include a key positioned in an opening in the first side 331 and a key signal generator (not separately illustrated) configured to generate a key signal in response to a press or touch on the key. The positions or number of key input modules 412 or 413 may vary (not separately illustrated) without being limited to the illustrated example.

According to an embodiment, the first connection terminal 414 may be positioned inside the electronic device 3 to correspond to the first connection terminal hole provided in the fourth side 334. An external electronic device may be electrically connected to the electronic device 3 via the first connection terminal 4141. The electronic device 3 may receive or transmit power and/or data from or to an external electronic device via the first connection terminal 414. The first connection terminal 414 may include, for example, a USB connector or an HDMI connector. The positions or number of first connection terminals 414 may vary (not separately illustrated) without being limited to the illustrated example.

According to an embodiment, the second connection terminal (not separately illustrated) may be positioned inside the electronic device 3 to correspond to a second connector hole provided in the fourth side 334. A cover member 415 may be positioned in the second connector hole to cover the second connection terminal. An external storage medium such as a SIM card (or a universal SIM (USIM) card) or a memory card (e.g., a secure digital (SD) memory card) may be connected to the second connector. The positions or number of second connection terminals may vary without being limited to the illustrated example.

According to an embodiment, the antenna module 5 may be positioned inside the electronic device 3 to correspond to the first side 331. The antenna module 5 may be positioned closer to the first side 331 than to the second side 332. Electromagnetic waves (or radio waves) transmitted (or radiated) from the antenna module 5 may pass through the first side 331 to propagate to the exterior of the electronic device 3. Electromagnetic waves transmitted from the exterior of the electronic device 3 may pass through the first side 331 to be received (or detected) by the antenna module 5.

According to various embodiments, the antenna module 5 may be the third antenna module 246 of FIG. 2.

According to an embodiment, the antenna module 5 may include an antenna structure 51, a communication circuit (or wireless communication circuit) 54, and/or a power management circuit 55.

According to an embodiment, the antenna structure 51 may include a printed circuit board 510. The printed circuit board 510 may include a first surface 511 and a second surface 512 facing away from the first surface 511. The first surface 511 and the second surface 512 may, for example, be substantially parallel.

According to an embodiment, the first surface 511 of the printed circuit board 510 may face the first side 331.

According to an embodiment, a first direction 501 in which the first surface 511 of the printed circuit board 510 is oriented may be substantially parallel to a direction from the second side 332 toward the first side 331 (e.g., the +x-axis direction) when viewed from above the front surface 30A of the electronic device 3 (e.g., in the -z-axis direction).

According to an embodiment, the printed circuit board 510 may include a plurality of pattern layers (not separately illustrated) including conductive patterns and a plurality of non-conductive layers (e.g., insulating layers) (not separately illustrated) alternately laminated with the plurality of pattern layers.

According to an embodiment, the printed circuit board 510 may include a plurality of conductive vias (not separately illustrated). The conductive vias may be conductive holes provided to allow connection wires to be disposed for electrically connecting conductive patterns of different pattern layers. The conductive vias may include, for example, a plated through hole (PTH), a laser via hole (LVH), a buried via hole (BVH), or a stacked via. At least one conductive via may, for example, electrically connect signal line patterns included in different pattern layers (e.g., patterns of conductive lines utilized as electrical paths) as portions of a signal line. At least one conductive via may, for example, electrically connect ground planes (or ground areas or ground patterns) included in different pattern layers.

According to an embodiment, the printed circuit board 510 may include an antenna array 52. The antenna array 52 may, for example, be implemented as some conductive patterns among the plurality of pattern layers included in the printed circuit board 510. The antenna array 52 may be disposed on the first surface 511 or disposed inside the printed circuit board 510 closer to the first surface 511 than to the second surface 512. The antenna array 52 may include a plurality of antenna elements 521, 522, 523, 524, and 525. The plurality of antenna elements 521, 522, 523, 524, and 525 may be, for example, the antenna 248 of FIG. 2.

According to an embodiment, the plurality of antenna elements 521, 522, 523, 524, and 525 may have substantially the same shape and may be disposed at regular intervals. The plurality of antenna elements 521, 522, 523, 524, and 525 may be disposed in a second direction 502 (e.g., the y-axis direction) when viewed from above the first surface 511 (e.g., in the +x-axis direction). The second direction 502 may be substantially parallel to a direction from the fourth side 334 toward the third side 333 (e.g., the +y-axis direction) or a direction from the third side 333 toward the fourth side 334 (e.g., the -y-axis direction) when viewed from above the front surface 30A of the electronic device 3.

According to an embodiment, when viewed from above the first surface 511 of the printed circuit board 510, the plurality of antenna elements 521, 522, 523, 524, and 525 may be substantially square-shaped. For example, when viewed from above the first surface 511, the first antenna element 521 may include a first edge E1, a second edge E2, a third edge E3, and a fourth edge E4. When viewed from above the first surface 511, the first edge E1 and the second edge E2 may be spaced apart from each other in the second direction 502 and may be substantially parallel to each other. When viewed from above the first surface 511, the third edge E3 and the fourth edge E4 may be spaced apart from each other in a third direction 503 perpendicular to the second direction 502 and may be substantially parallel to each other. The third direction 503 may be substantially parallel to a direction in which the front surface 30A of the electronic device 3 is oriented or a direction in which the rear surface 30B of the electronic device 3 is oriented. The remaining antenna elements 522, 523, 524, and 525 may have substantially the same shape as the first antenna element 521. The shape of the plurality of antenna elements 521, 522, 523, 524, and 525 is not limited thereto and may vary. The plurality of antenna elements 521, 522, 523, 524, and 525 may, for example, be provided in various polygonal shapes such as circular, elliptical, or triangular (not separately illustrated).

According to various embodiments, the number or positions of antenna elements included in the antenna array 52 are not limited to the illustrated embodiment and may vary (not separately illustrated).

According to various embodiments, the number or positions of antenna arrays 52 are not limited to the illustrated embodiment and may vary (not separately illustrated).

According to an embodiment, the printed circuit board 510 may include a ground plane 53 that functions as an antenna ground. The ground plane 53 may contribute to securing antenna radiation performance (or radio wave transmission/reception performance or communication performance) and/or coverage with respect to the plurality of antenna elements 521, 522, 523, 524, and 525. The ground plane 53 may reduce electromagnetic interference (EMI) (or signal loss) with respect to the plurality of antenna elements 521, 522, 523, 524, and 525.

According to an embodiment, the ground plane 53 may be positioned closer to the second surface 512 of the printed circuit board 510 than to the antenna array 52. When viewed from above the first surface 511 of the printed circuit board 510, the antenna array 52 may at least partially overlap the ground plane 53. For example, the antenna array 52 may be included in a first pattern layer (not separately illustrated) of the printed circuit board 510, and the ground plane 53 may be included in a second pattern layer (not separately illustrated) closer to the second surface 512 than to the first pattern layer.

According to an embodiment, the antenna structure 51 may function as a patch antenna. When the communication circuit 54 provides (or feeds) electromagnetic signals (or wireless signals, RF signals, or radiation currents) to the plurality of antenna elements 521, 522, 523, 524, and 525, the antenna structure 51 may function as a resonator (e.g., a patch antenna) since the plurality of antenna elements 521, 522, 523, 524, and 525 resonate with the ground plane 53 and act as radiating elements. The plurality of antenna elements 521, 522, 523, 524, and 525 may be interpreted as a plurality of patches.

According to an embodiment, the plurality of antenna elements 521, 522, 523, 524, and 525 may be included in a single pattern layer (not separately illustrated) among the plurality of pattern layers included in the printed circuit board 510 (e.g., a single-layer patch structure). For example, the plurality of antenna elements 521, 522, 523, 524, and 525 may be directly fed from the communication circuit 54.

According to various embodiments, the printed circuit board 510 may further include a plurality of dummy antenna elements (e.g., dummy patches) (not separately illustrated) (e.g., a stacked patch structure). When viewed from above the first surface 511 of the printed circuit board 510, the plurality of dummy antenna elements may be positioned to overlap one-to-one with the plurality of antenna elements 521, 522, 523, 524, and 525 and may be in an electrically floating state. A pattern layer including the plurality of dummy antenna elements may be positioned closer to the first surface 511 than to another pattern layer including the plurality of antenna elements 521, 522, 523, 524, and 525. The communication circuit 54 provides (or feeds) electromagnetic signals (or wireless signals, RF signals, or radiation currents) to the plurality of antenna elements 521, 522, 523, 524, and 525, and the dummy antenna elements may be indirectly fed from the plurality of antenna elements 521, 522, 523, 524, and 525. The plurality of antenna elements 521, 522, 523, 524, and 525 may be defined or interpreted as a plurality of feeding antenna elements. The plurality of dummy antenna elements may be electromagnetically coupled with the plurality of antenna elements 521, 522, 523, 524, and 525, may operate as a part of a radiator, and may adjust radiation characteristics. The plurality of dummy antenna elements may, for example, shift the resonant frequency of the antenna module 5 to a predetermined frequency or by a predetermined amount. The plurality of dummy antenna elements may, for example, expand the bandwidth in which electromagnetic waves can be transmitted or received via the antenna module 5, or may form different frequency bands (e.g., multiple bands). The plurality of dummy antenna elements may, for example, reduce electromagnetic noise and improve antenna performance.

According to various embodiments, the printed circuit board 510 may further include a plurality of feeding antenna elements (not separately illustrated) that at least partially overlap the plurality of antenna elements 521, 522, 523, 524, and 525 and are physically separated from the plurality of antenna elements 521, 522, 523, 524, and 525 when viewed from above the first surface 511 (e.g., a stacked patch structure). A pattern layer including the plurality of antenna elements 521, 522, 523, 524, and 525 may be positioned closer to the first surface 511 than to a pattern layer including the plurality of feeding antenna elements. The communication circuit 54 provides (or feeds) electromagnetic signals (or wireless signals, RF signals, or radiation currents) to the plurality of feeding antenna elements, and the plurality of antenna elements 521, 522, 523, 524, and 525 may be indirectly fed from the plurality of feeding antenna elements. The plurality of antenna elements 521, 522, 523, 524, and 525 may be interpreted as a plurality of dummy antenna elements.

According to an embodiment, the communication circuit 54 may be positioned on the second surface 512 of the printed circuit board 510 via a conductive adhesive material (or conductive bonding material) such as solder. The communication circuit 54 may be electrically connected to the plurality of antenna elements 521, 522, 523, 524, and 525 via wirings (or electrical paths) included in the printed circuit board 510.

According to an embodiment, the communication circuit 54 may include a radio frequency integrated circuit (RFIC). The communication circuit 54 may correspond to, for example, the third RFIC 226 of FIG. 2.

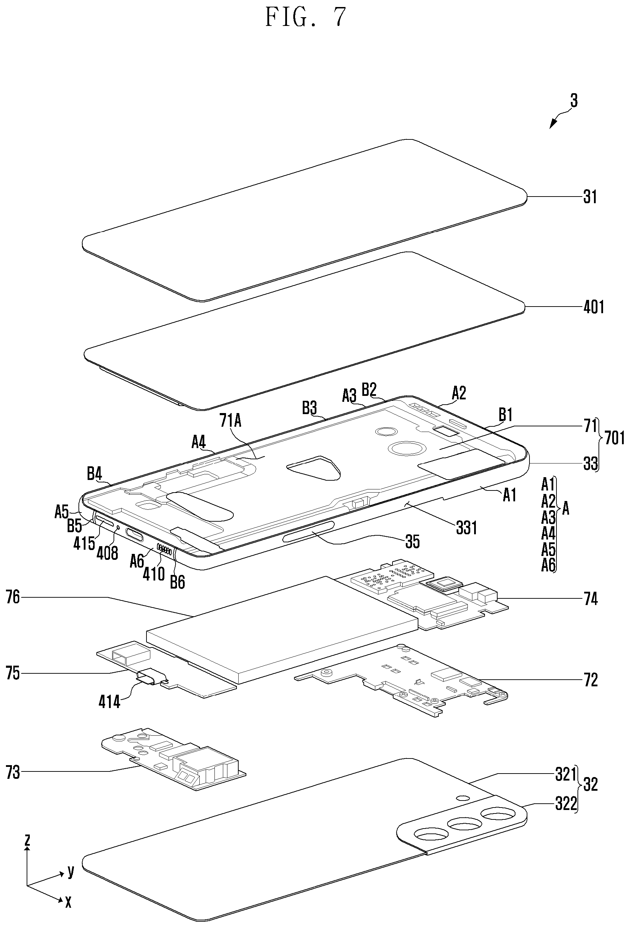

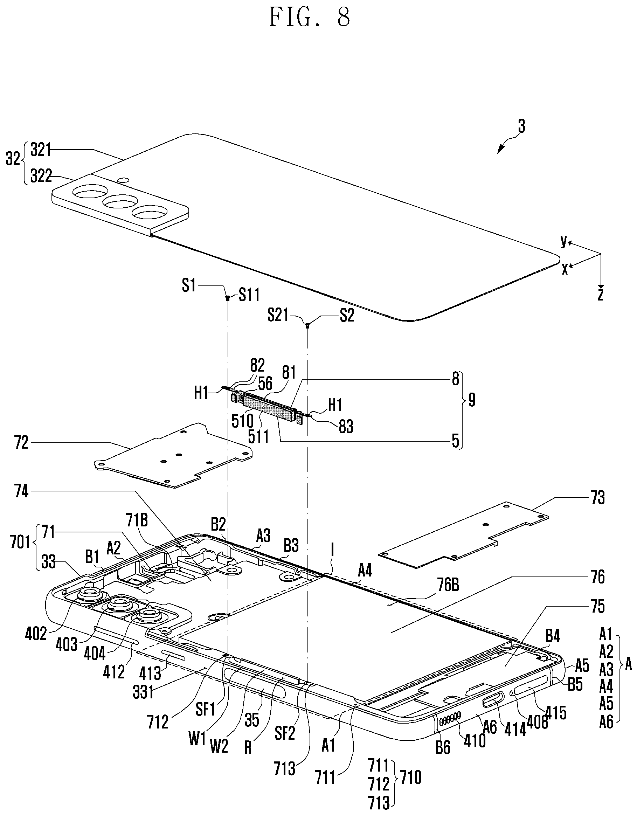

According to various embodiments, the communication circuit 54 may be disposed on a printed circuit board different from the printed circuit board 510. The different printed circuit board may correspond to, for example, the first printed circuit board 74 of FIGS. 7 and 8, on which components such as the processor 120, the memory 130, or the communication module 190 of FIG. 1 are disposed. For example, the communication circuit 54 may be omitted from the antenna module 5.

According to an embodiment, the communication circuit 54 may perform up-converting or down-converting of a frequency of a transmitted or received signal. For example, the communication circuit 54 may receive an intermediate frequency (IF) signal from a wireless communication circuit (e.g., the wireless communication module 192 of FIG. 1) disposed on a different printed circuit board (e.g., the first printed circuit board 74 of FIGS. 7 and 8), and may up-convert the received IF signal into a radio frequency (RF) signal (e.g., a mmWave signal). As another example, the communication circuit 54 may down-convert an RF signal received via the antenna array 52 into an intermediate frequency (IF) signal, and the IF signal may be provided to a wireless communication circuit (e.g., the wireless communication module 192 of FIG. 1) disposed on a different printed circuit board (e.g., the first printed circuit board 74 of FIGS. 7 and 8).

According to an embodiment, the communication circuit 54 may transmit and/or receive signals in substantially the same frequency band (or frequency) via the plurality of antenna elements 521, 522, 523, 524, and 525.

According to an embodiment, the communication circuit 54 may transmit and/or receive signals in at least a portion of a frequency band ranging from about 3 GHz to about 100 GHz via the plurality of antenna elements 521, 522, 523, 524, and 525.

According to an embodiment, the power management circuit 55 may be disposed on the second surface 512 of the printed circuit board 510 via a conductive adhesive material (or conductive bonding material) such as solder. The power management circuit 55 may be electrically connected to the communication circuit 54 or various other components (e.g., passive elements) disposed on the printed circuit board 510 via wires (or electrical paths) included in the printed circuit board 510.

According to an embodiment, the power management circuit 55 may include a power management integrated circuit (PMIC).

According to various embodiments, the power management circuit 55 may be disposed on a printed circuit board (e.g., the first printed circuit board 74 of FIGS. 7 and 8) different from the printed circuit board 510. For example, the power management circuit 55 may be omitted from the antenna module 5.

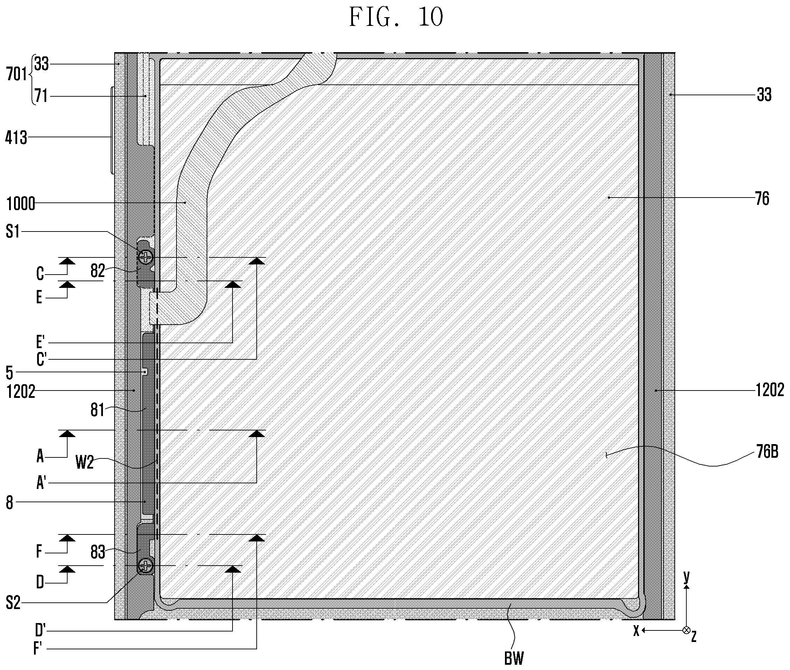

According to an embodiment, the antenna module 5 may be electrically connected to a different printed circuit board (e.g., the first printed circuit board 74 of FIGS. 7 and 8) via an electrical connection member (not separately illustrated), such as a flexible printed circuit board (FPCB) (e.g., the flexible printed circuit board 1000 of FIG. 10). For example, one end portion of the electrical connection member (not separately illustrated) may be electrically connected to a connector (e.g., an FPCB connector) (not separately illustrated) disposed on the second surface 512 of the printed circuit board 510, and the other end of the electrical connection member may be electrically connected to a connector disposed on a different printed circuit board (e.g., the first printed circuit board 74 of FIGS. 7 and 8). As another example, one end of the electrical connection member (not separately illustrated) may be electrically connected to conductive terminals (e.g., lands or copper pads) provided on the second surface 512 via a conductive adhesive material (or conductive bonding material) such as solder.

According to various embodiments, the antenna module 5 may further include a shielding member (or an electromagnetic shielding member) (not separately illustrated) that encloses at least one of the communication circuit 54 and/or the power management circuit 55. The shielding member may reduce electromagnetic interference (e.g., electromagnetic noise) related to the communication circuit 54 and/or the power management circuit 55. The shielding member may, for example, include a conductive member such as a shield can. As another example, the shielding member may include a protective member such as urethane resin and a conductive coating such as an electromagnetic interference (EMI) paint applied to the outer surface of the protective member. In various embodiments, the shielding member may be provided as various shielding sheets.

According to various embodiments, the antenna module 5 may further include a frequency tuning circuit (or matching circuit) (not separately illustrated) disposed on the printed circuit board 510. The frequency tuning circuit may include, for example, a tuner or a passive element. The frequency tuning circuit may perform impedance matching, may shift a resonant frequency to a designated frequency, or may shift the resonant frequency by a predetermined amount.

According to an embodiment, the printed circuit board 510 may include a first electrical path (not separately illustrated) that transmits an electromagnetic signal (or wireless signal, RF signal, or radiation current) to the first antenna element 521. The first electrical path may electrically connect the first antenna element 521 and the communication circuit 54. The first electrical path may be defined or interpreted as a "first transmission line" or a "first feeding line" via which the electromagnetic signal is transmitted.

According to an embodiment, a portion of the first antenna element 521 to which an electromagnetic signal (or wireless signal, RF signal, or radiation current) is transmitted from the first electrical path may be defined or interpreted as a first feeding portion FP1. According to various embodiments, the first electrical path or a portion of the first electrical path connected to the first antenna element 521 may be defined or interpreted as a "first feeding portion," and a portion of the first antenna element 521 to which the electromagnetic signal is transmitted from the first electrical path may be defined or interpreted as a "first feeding point." Providing an electromagnetic signal to the first feeding portion FP1 (or the first electrical path or the first feeding point) by the communication circuit 54 may be defined or interpreted as "first feeding."

According to an embodiment, when viewed from above the first surface 511 of the printed circuit board 510, the first feeding portion FP1 may be positioned between the center C of the first antenna element 521 and the first edge E1. When viewed from above the first surface 511, the distance of the center C of the first antenna element 521 from the first edge E1 in the second direction 502 and the distance of the center C of the first antenna element 521 from the second edge E2 may be substantially the same. When viewed from above the first surface 511, the distance of the center C of the first antenna element 521 from the third edge E3 in the third direction 503 and the distance of the center C of the first antenna element 521 from the fourth edge E4 may be substantially the same.

According to an embodiment, when viewed from above the first surface 511 of the printed circuit board 510, the first feeding portion FP1 may be positioned closer to the first edge E1 than to the center C of the first antenna element 521.

According to various embodiments, the first feeding portion FP1 may be substantially positioned at the first edge E1 (not separately illustrated).

According to an embodiment, the printed circuit board 510 may include a second electrical path (not separately illustrated) that transmits an electromagnetic signal (or wireless signal, RF signal, or radiation current) to the first antenna element 521. The second electrical path may electrically connect the first antenna element 521 and the communication circuit 54. The second electrical path may be defined or interpreted as a "second transmission line" or a "second feeding line" via which the electromagnetic signal is transmitted.

According to an embodiment, a portion of the first antenna element 521 to which an electromagnetic signal (or wireless signal, RF signal, or radiation current) is transmitted from the second electrical path may be defined or interpreted as a second feeding portion FP2. According to various embodiments, the second electrical path or a portion of the second electrical path connected to the second antenna element 521 may be defined or interpreted as a "second feeding portion," and a portion of the first antenna element 521 to which the electromagnetic signal is transmitted from the second electrical path may be defined or interpreted as a "second feeding point." Providing an electromagnetic signal to the second feeding portion FP2 (or the second electrical path or the second feeding point) by the communication circuit 54 may be defined or interpreted as "second feeding."

According to an embodiment, when viewed from above the first surface 511 of the printed circuit board 510, the second feeding portion FP2 may be positioned between the center C of the first antenna element 521 and the third edge E3.

According to an embodiment, when viewed from above the first surface 511 of the printed circuit board 510, the second feeding portion FP2 may be positioned closer to the third edge E3 than to the center C of the first antenna element 521.

According to various embodiments, the second feeding portion FP2 may be substantially positioned at the third edge E3 (not separately illustrated).

According to an embodiment, when viewed from above the first surface 511 of the printed circuit board 510, the first feeding portion FP1 and the second feeding portion FP2 may form a substantially 90-degree angle with respect to the center C of the first antenna element 521.

According to an embodiment, when viewed from above the first surface 511 of the printed circuit board 510, the distance by which the first feeding portion FP1 is spaced apart from the center C of the first antenna element 521 in the second direction 502 may be substantially the same as the distance by which the second feeding portion FP2 is spaced apart from the center C of the first antenna element 521 in the third direction 503.

According to an embodiment, when viewed from above the first surface 511 of the printed circuit board 510, the distance by which the first feeding portion FP1 is spaced apart from the first edge E1 in the second direction 502 may be substantially the same as the distance by which the second feeding portion FP2 is spaced apart from the third edge E3 in the third direction 503.

According to an embodiment, when the communication circuit 54 provides (or feeds) an electromagnetic signal (or wireless signal, RF signal, or radiation current) to the first feeding portion FP1 via the first electrical path, an electromagnetic wave of a first linear polarization may be radiated from the first antenna element 521. When the communication circuit 54 provides an electromagnetic signal to the first feeding portion FP1, an electromagnetic wave of the first linear polarization having a first polarization direction may be radiated due to the current path (or the surface current distribution) on the first antenna element 521. The first linear polarization may be an electromagnetic wave that oscillates in the first polarization direction. The first linear polarization may be interpreted as the polarity direction of the electric field with respect to the propagation direction (or transmission direction) of the electromagnetic wave radiated (or transmitted) from the first antenna element 521. The first polarization direction may be the direction in which the electric field oscillates (or a direction parallel to the vector of the electric field) and may be perpendicular to the propagation direction of the electromagnetic wave. The propagation direction of the electromagnetic wave may correspond to the direction in which the plane of the first antenna element 521, having a flat plate (or planar) shape, is oriented (e.g., the first direction 501 in which the first surface 511 of the printed circuit board 510 is oriented).

According to an embodiment, during the first feeding, the first polarization direction of the first linear polarization radiated from the first antenna element 521 may be substantially the second direction 502.

According to an embodiment, when the communication circuit 54 provides (or feeds) an electromagnetic signal (or wireless signal, RF signal, or radiation current) to the second feeding portion FP2 via the second electrical path, an electromagnetic wave of a second linear polarization may be radiated from the first antenna element 5215. When the communication circuit 54 provides an electromagnetic signal to the second feeding portion FP2, an electromagnetic wave of the second linear polarization having a second polarization direction (or oscillating in the second polarization direction) may be radiated due to the current path (or the surface current distribution) on the first antenna element 521. The second polarization direction may be perpendicular to the propagation direction of the electromagnetic wave (e.g., the -z-axis direction).

According to an embodiment, during the second feeding, the second polarization direction of the second linear polarization radiated from the first antenna element 521 may be substantially the third direction 503.

According to various embodiments, the first feeding portion FP1 may be positioned between the center C of the first antenna element 521 and the second edge E2 (not separately illustrated). When viewed from above the first surface 511 of the printed circuit board 510, the first feeding portion FP1 and the second feeding portion FP2 may form a substantially 90-degree angle with respect to the center C of the first antenna element 521. When viewed from above the first surface 511, the distance by which the first feeding portion FP1 is spaced apart from the center C of the first antenna element 521 in the second direction 502 may be substantially the same as the distance by which the second feeding portion FP2 is spaced apart from the center C of the first antenna element 521 in the third direction 503. When viewed from above the first surface 511, the distance by which the first feeding portion FP1 is spaced apart from the second edge E2 in the second direction 502 may be substantially the same as the distance by which the second feeding portion FP2 is spaced apart from the third edge E3 in the third direction 503.

According to various embodiments, the second feeding portion FP2 may be positioned between the center C of the first antenna element 521 and the fourth edge E4 (not separately illustrated). When viewed from above the first surface 511 of the printed circuit board 510, the first feeding portion FP1 and the second feeding portion FP2 may form a substantially 90-degree angle with respect to the center C of the first antenna element 521. When viewed from above the first surface 511, the distance by which the first feeding portion FP1 is spaced apart from the center C of the first antenna element 521 in the second direction 502 may be substantially the same as the distance by which the second feeding portion FP2 is spaced apart from the center C of the first antenna element 521 in the third direction 503. When viewed from above the first surface 511, the distance by which the first feeding portion FP1 is spaced apart from the first edge E1 in the second direction 502 may be substantially the same as the distance by which the second feeding portion FP2 is spaced apart from the fourth edge E4 in the third direction 503.

According to various embodiments, a single feeding portion replacing the first feeding portion FP1 and the second feeding portion FP2 may be provided. The single feeding portion may be substantially positioned, for example, at a first corner (e.g., a first vertex) where the first edge E1 and the third edge E3 meet, a second corner (e.g., a second vertex) where the second edge E2 and the third edge E3 meet, a third corner (e.g., a third vertex) where the second edge E2 and the fourth edge E4 meet, or a fourth corner (e.g., a fourth vertex) where the first edge E1 and the fourth edge E4 meet when viewed from above the first surface 511 of the printed circuit board 510. As another example, when viewed from above the first surface 511, the single feeding portion may be positioned between the center C of the first antenna element 521 and the first corner, between the center C of the first antenna element 521 and the second corner, between the center C of the first antenna element 521 and the third corner, or between the center C of the first antenna element 521 and the fourth corner. When the communication circuit 54 provides (or feeds) an electromagnetic signal (or wireless signal, RF signal, or radiation current) to the feeding portion, the linear polarization radiated from the first antenna element 521 may have a polarization direction that is substantially parallel to a diagonal direction forming a substantially 45-degree angle with the second direction 502 or the third direction 503 when viewed from above the first surface 511. The linear polarization having a diagonal polarization direction may be interpreted as a combination of a first polarization component parallel to the second direction 502 and a second polarization component parallel to the third direction 503.

According to various embodiments, although not separately illustrated, the first antenna element 521 may be provided in a form that includes a first notch provided at the first edge E1, a second notch provided at the second edge E2, a third notch provided at the third edge E3, and/or a fourth notch provided at the fourth edge E4. When viewed from above the first surface 511 of the printed circuit board 510, the center C of the first antenna element 521 may be positioned between the first notch and the second notch, and the first notch and the second notch may be provided substantially symmetrically with respect to the center C of the first antenna element 521. When viewed from above the first surface 511, the center C of the first antenna element 521 may be positioned between the third notch and the fourth notch, and the third notch and the fourth notch may be provided substantially symmetrically with respect to the center C of the first antenna element 521.

According to various embodiments, although not separately illustrated, the first antenna element 521 may be provided in a form that includes a fifth notch provided at a first corner where the first edge E1 and the third edge E3 meet, a sixth notch provided at a second comer where the second edge E2 and the third edge E3 meet, a seventh notch provided at a third corner where the second edge E2 and the fourth edge E4 meet, and/or an eighth notch provided at a fourth corner where the first edge E1 and the fourth edge E4 meet. When viewed from above the first surface 511 of the printed circuit board 510, the center C of the first antenna element 521 may be positioned between the fifth notch and the seventh notch, and the fifth notch and the seventh notch may be provided substantially symmetrically with respect to the center C of the first antenna element 521. When viewed from above the first surface 511, the center C of the first antenna element 521 may be positioned between the sixth notch and the eighth notch, and the sixth notch and the eighth notch may be provided substantially symmetrically with respect to the center C of the first antenna element 521.

According to various embodiments, although not separately illustrated, the shape of the first antenna element 521 and the position of the feeding portion may be variously provided to radiate a linear polarization corresponding to at least one selected or predetermined frequency band. The linear polarization may be interpreted as a combination of a first polarization component and a second polarization component, which respectively have polarization directions perpendicular to the other.

According to various embodiments, although not separately illustrated, the shape of the first antenna element 521 and the position of the feeding portion may be variously provided to radiate a circular polarization corresponding to at least one selected or predetermined frequency band. The circular polarization may be interpreted as a combination of a first polarization component and a second polarization component, which have polarization directions perpendicular to each other. When the phase difference between the first polarization component and the second polarization component is substantially 90 degrees, the combination of the first polarization component and the second polarization component may provide a synthesized wave having characteristics of circular polarization with an axial ratio that is substantially close to 1.

According to an embodiment, in substantially the same manner as the first resonator (e.g., a first patch resonator or a first patch resonating portion) (or a first radiating portion) including the first antenna element 521, the antenna module 5 may provide a second resonator (e.g., a second patch resonator or a second patch resonating portion) (or a second radiating portion) including the second antenna element 522. In substantially the same manner as the first resonator including the first antenna element 521, the antenna module 5 may provide a third resonator (e.g., a third patch resonator or a third patch resonating portion) (or a third radiating portion) including the third antenna element 523. In substantially the same manner as the first resonator including the first antenna element 521, the antenna module 5 may provide a fourth resonator (e.g., a fourth patch resonator or a fourth patch resonating portion) (or a fourth radiating portion) including the fourth antenna element 524. In substantially the same manner as the first resonator including the first antenna element 521, the antenna module 5 may provide a fifth resonator (e.g., a fifth patch resonator or a fifth patch resonating portion) (or a fifth radiating portion) including the fifth antenna element 525.

According to an embodiment, the electronic device 3 may include a beamforming system (or beamforming circuit) for the antenna module 5. The beamforming system may allow a stronger signal to be received in a desired direction, a signal to be transmitted in a desired direction, or a signal to be prevented from being received from an undesired direction. The beamforming system included in the communication circuit 54 may adjust the beam pattern (e.g., the shape and direction of a beam) by controlling the phase or amplitude of an electromagnetic signal (or wireless signal, RF signal, or radiation current).

According to an embodiment, a processor (e.g., the processor 120 of FIG. 1) may determine the phase of electromagnetic signals (or wireless signals, RF signals, or radiation currents) provided (or fed) to the plurality of antenna elements 521, 522, 523, 524, and 525 based on codebook information related to beamforming stored in memory (e.g., the memory 130 of FIG. 1) and according to the frequency (or frequency band) used by an application (or program). The communication circuit 54 of the antenna module 5 may adjust the phases of the electromagnetic signals provided (or fed) to the plurality of antenna elements 521, 522, 523, 524, and 525 under the control of the processor. The communication circuit 54 of the antenna module 5 may efficiently control (e.g., allocate or arrange) a plurality of beams via a plurality of resonators (or radiating portions) (e.g., the first resonator, the second resonator, the third resonator, the fourth resonator, and the fifth resonator) included in the antenna module 5 under the control of the processor.

According to an embodiment, during feeding to the first resonator, which includes the first antenna element 521, a radiation field (or electromagnetic field) may be generated from the first resonator. The radiation field generated from the first resonator may include, for example, a first radiation field generated from the first resonator during first feeding and/or a second radiation field generated from the first resonator during second feeding. The first radiation field and the first beam pattern provided by the first radiation field may correspond to a first linear polarization having a first polarization direction (e.g., substantially the second direction 502). The second radiation field and the second beam pattern provided by the second radiation field may correspond to a second linear polarization having a second polarization direction (e.g., substantially the third direction 503). The second resonator including the second antenna element 522 may provide a radiation field in substantially the same or a similar manner as the first resonator including the first antenna element 521. The third resonator including the third antenna element 523 may provide a radiation field in substantially the same or a similar manner as the first resonator including the first antenna element 521. The fourth resonator including the fourth antenna element 524 may provide a radiation field in substantially the same or a similar manner as the first resonator including the first antenna element 521. The fifth resonator including the fifth antenna element 525 may provide a radiation field in substantially the same or a similar manner as the first resonator including the first antenna element 521.

According to an embodiment, the radiation field from the first resonator including the first antenna element 521, the radiation field from the second resonator including the second antenna element 522, the radiation field from the third resonator including the third antenna element 523, the radiation field from the fourth resonator including the fourth antenna element 524, or the radiation field from the fifth resonator including the fifth antenna element 525 may provide a beam pattern that radiates or concentrates relatively more electromagnetic wave energy (or wave energy) in the first direction 501 in which the first surface 511 of the printed circuit board 510 is oriented.

According to an embodiment, interference (e.g., constructive interference and/or destructive interference) among the radiation field (or beam pattern) from the first resonator, the radiation field (or beam pattern) from the second resonator, the radiation field (or beam pattern) from the third resonator, the radiation field (or beam pattern) from the fourth resonator, and the radiation field (or beam pattern) from the fifth resonator may allow relatively more electromagnetic wave energy (or wave energy) to be radiated or concentrated in the first direction 501 in which the first surface 511 of the printed circuit board 510 is oriented.

According to an embodiment, during the first feeding to the first resonator including the first antenna element 521, a beam pattern of the first linear polarization having the first polarization direction (e.g., the second direction 502) (or oscillating in the first polarization direction) may be radiated from the first resonator. During the first feeding to the second resonator including the second antenna element 522, a beam pattern of the first linear polarization having the first polarization direction (or oscillating in the first polarization direction) may be radiated from the second resonator. During the first feeding to the third resonator including the third antenna element 523, a beam pattern of the first linear polarization having the first polarization direction (or oscillating in the first polarization direction) may be radiated from the third resonator. During the first feeding to the fourth resonator including the fourth antenna element 524, a beam pattern of the first linear polarization having the first polarization direction (or oscillating in the first polarization direction) may be radiated from the fourth resonator. During the first feeding to the fifth resonator including the fifth antenna element 525, a beam pattern of the first linear polarization having the first polarization direction (or oscillating in the first polarization direction) may be radiated from the fifth resonator. According to an embodiment, during the first feeding, interference (e.g., constructive interference and/or destructive interference) among the beam pattern from the first resonator, the beam pattern from the second resonator, the beam pattern from the third resonator, the beam pattern from the fourth resonator, and the beam pattern from the fifth resonator may provide a synthesized beam pattern (or radiation pattern) of the first polarization direction, in which relatively more wave energy may be radiated or concentrated within the coverage range corresponding to the first direction 501 in which the first surface 511 of the printed circuit board 510 is oriented.

According to an embodiment, during the second feeding to the first resonator including the first antenna element 521, a beam pattern of the second linear polarization having the second polarization direction (e.g., the third direction 503) (or oscillating in the second polarization direction) may be radiated from the second resonator. During the second feeding to the second resonator including the second antenna element 522, a beam pattern of the second linear polarization having the second polarization direction (or oscillating in the second polarization direction) may be radiated from the second resonator. During the second feeding to the third resonator including the third antenna element 523, a beam pattern of the second linear polarization having the second polarization direction (or oscillating in the second polarization direction) may be radiated from the third resonator. During the second feeding to the fourth resonator including the fourth antenna element 524, a beam pattern of the second linear polarization having the second polarization direction (or oscillating in the second polarization direction) may be radiated from the fourth resonator. During the second feeding to the fifth resonator including the fifth antenna element 525, a beam pattern of the second linear polarization having the second polarization direction (or oscillating in the second polarization direction) may be radiated from the fifth resonator. According to an embodiment, during the second feeding, interference (e.g., constructive interference and/or destructive interference) among the beam pattern from the first resonator, the beam pattern from the second resonator, the beam pattern from the third resonator, the beam pattern from the fourth resonator, and the beam pattern from the fifth resonator may provide a synthesized beam pattern (or radiation pattern) of the second polarization direction, in which relatively more wave energy may be radiated or concentrated within the coverage range corresponding to the first direction 501 in which the first surface 511 of the printed circuit board 510 is oriented.

According to an embodiment, the electronic device 3 may include a radio frequency (RF) window area (or an electromagnetic wave transmission area) (not separately illustrated) corresponding to the antenna module 5. Electromagnetic waves transmitted (or radiated) from the antenna module 5 may pass through the RF window area to propagate to the exterior of the electronic device 3. Electromagnetic waves transmitted from the exterior of the electronic device 3 may pass through the RF window area to be received (or detected) by the antenna module 5. The RF window area may be positioned to at least partially correspond to the coverage (or beam coverage) (e.g., communication range) of the antenna module 5.

According to an embodiment, when viewed from above the first surface 511 of the printed circuit board 510, the RF window area may at least partially overlap the first surface 511.

According to an embodiment, when viewed from above the first surface 511 of the printed circuit board 510, the RF window area may include a portion of the first side 331 that at least partially overlaps the first surface 511.

According to an embodiment, the RF window area may include a dielectric material of a non-conductive material, an air gap, or a combination thereof. The air gap may be defined or interpreted as a dielectric material having the permittivity of air.

According to an embodiment, the RF window area may be implemented to reduce the influence on the antenna radiation performance (or electromagnetic wave transmission/reception performance) or the coverage (or beam coverage) of the antenna module 5. The RF window area may have a permittivity that is capable of reducing the electromagnetic influence on the antenna module 5. The RF window area may have a permittivity that is capable of reducing the degradation of the antenna radiation performance of the antenna module 5 or a permittivity that does not degrade the antenna radiation performance to a threshold level or lower. The RF window area may have a permittivity that has an effect within a range that does not exceed the coverage area intended to be secured by the antenna module 5 or a permittivity that substantially does not affect the coverage of the antenna module 5.

According to an embodiment, the permittivity of the RF window area may be a value that is capable of reduce the difference from the permittivity of air (e.g., a low permittivity).

According to various embodiments, the RF window area may include a dielectric lens (or an electromagnetic lens) or may be implemented to operate as a dielectric lens. A dielectric lens may focus or diffuse electromagnetic waves, similar to how an optical lens refracts light waves. A dielectric lens may secure or enhance the antenna radiation performance and/or coverage of the antenna module 5.

According to an embodiment, the first metal portion A1 included in the side surface metal A of the side 33 may include an opening 34 provided to correspond to the antenna module 5. Electromagnetic waves transmitted (or radiated) from the antenna module 5 may pass through the opening 34 to propagate to the exterior of the electronic device 3. Electromagnetic waves transmitted from the exterior of the electronic device 3 may pass through the opening 34 to be received (or detected) by the antenna module 5.

According to an embodiment, the opening 34 of the first metal portion A1 may reduce the influence of the first metal portion A1 on the electromagnetic waves radiated from the antenna module 5, thereby reducing beam pattern deformation (e.g., distortion), compared to a comparative example in which the opening 34 is omitted.

Hereinafter, the term "comparative example" is used merely for comparison with the embodiment of the disclosure and does not have a prior art status over the various embodiments of the disclosure.

According to an embodiment, the first side 333 may include a non-conductive portion 35 of a non-conductive material (e.g., a polymer) disposed in the opening 34 of the first metal portion A1.

According to an embodiment, when viewed from above the first surface 511 of the printed circuit board 510, the non-conductive portion 35 may overlap the antenna array 52. The non-conductive portion 35 may be included in the RF window area corresponding to the antenna module 5.

According to an embodiment, electromagnetic waves transmitted (or radiated) from the antenna module 5 may pass through the non-conductive portion 35 to propagate to the exterior of the electronic device 3. Electromagnetic waves transmitted from the exterior of the electronic device 3 may pass through the non-conductive portion 35 to be received (or detected) by the antenna module 5.

According to an embodiment, the opening 34 provided in the first metal portion A1 corresponding to the antenna module 5 may be a through-hole. When viewed from above the first surface 511 of the printed circuit board 510, the first metal portion A1 may include a surrounding conductive area that entirely surrounds the opening 34. When viewed from above the first surface 511, the opening 34 entirely surrounded by the surrounding conductive area may be interpreted as a through-hole. The shape of the opening 3037 is not limited to the illustrated example and may vary (not separately illustrated).

According to an embodiment, the non-conductive portion 35 may have a permittivity capable of reducing the electromagnetic influence on the antenna radiation performance (or electromagnetic wave transmission/reception performance) or the coverage (or beam coverage) of the antenna module 5.

According to an embodiment, the permittivity of the non-conductive portion 35 may be a value capable of reducing the difference from the permittivity of air (e.g., a low permittivity).

According to an embodiment, the non-conductive portion 35 may provide a portion of the side surface 30C of the electronic device 3. A partial surface area of the side surface 30C of the electronic device 3 provided by the non-conductive portion 35 may be smoothly connected to a partial surface area of the side surface 30C of the electronic device 3 provided by the first metal portion A1 without a substantial height difference.

According to various embodiments, the side 33 may further include a coating layer (not separately illustrated) of various colors or textures that substantially provides the side surface 30C. The coating layer may suppress or prevent the non-conductive portion 35 and the first metal portion A1 from appearing distinguishable.

According to various embodiments, the non-conductive portion 35 and the first metal portion A1 may have substantially the same color to suppress or prevent them from appearing distinguishable.

According to various embodiments, although not separately illustrated, the antenna module 5 may be positioned to correspond to the second side 332, the third side 333, or the fourth side 334.

The electronic device 3 may further include various components depending on its provision form. Although all of these components cannot be listed since the components are modified diversely depending on the convergence trend of electronic devices 3, components equivalent to the above-mentioned components may be further included in the electronic device 3. In various embodiments, certain components may be excluded from the above-described components or replaced with other components depending on the provided form of the electronic device.

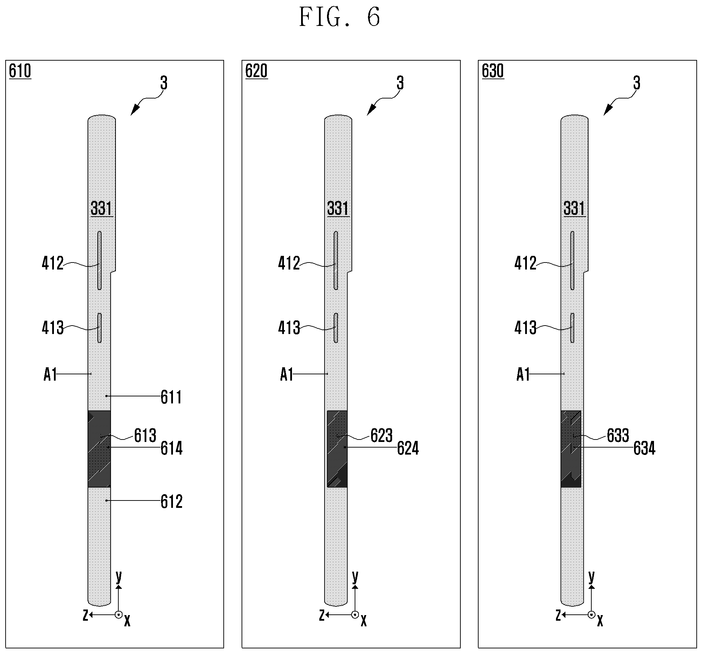

FIG. 6 illustrates electronic devices 3 according to various embodiments of the disclosure.

Referring to FIG. 6, the opening 34 provided in the first metal portion A1 and the non-conductive portion 35 corresponding to the opening 34 are not limited to the exemplary embodiment of FIG. 3 and may be modified into various other forms.

According to a first exemplary embodiment 610, the first metal portion A1 may include a first conductive portion 611, a second conductive portion 612, and a segmentation portion 613 between the first conductive portion 611 and the second conductive portion 612. The segmentation portion 613 may be interpreted as another form of opening that replaces the through-hole-shaped opening 34 described with reference to FIG. 3. A non-conductive portion 614 may be disposed in the segmentation portion 613. The non-conductive portion 614 may be included in the RF window area corresponding to the antenna module 5 (see FIG. 3).

According to a second exemplary embodiment 620, the first metal portion A1 may include a first notch 623. When viewed from above the first surface 511 (see FIG. 5) of the antenna module 5, the first notch 623 may be recessed in the direction in which the front surface 30A (see FIG. 3) of the electronic device 3 is oriented (e.g., the +z-axis direction). The first notch 623 may be interpreted as another form of opening that replaces the through-hole-shaped opening 34 described with reference to FIG. 3. A non-conductive portion 624 may be disposed in the first notch 623. The non-conductive portion 624 may be included in the RF window area corresponding to the antenna module 5 (see FIG. 3).

According to a third exemplary embodiment 630, the first metal portion A1 may include a second notch 633. When viewed from above the first surface 511 (see FIG. 5) of the antenna module 5, the second notch 633 may be recessed in the direction in which the rear surface 30B (see FIG. 3) of the electronic device 3 is oriented (e.g., the -z-axis direction). The second notch 633 may be interpreted as another form of opening that replaces the through-hole-shaped opening 34 described with reference to FIG. 3. A non-conductive portion 634 may be disposed in the second notch 633. The non-conductive portion 634 may be included in the RF window area corresponding to the antenna module 5 (see FIG. 3).

According to various embodiments, the opening provided in the first metal portion A1 and the non-conductive portion corresponding to the opening may be provided in various other forms corresponding to the coverage of the antenna module 5.

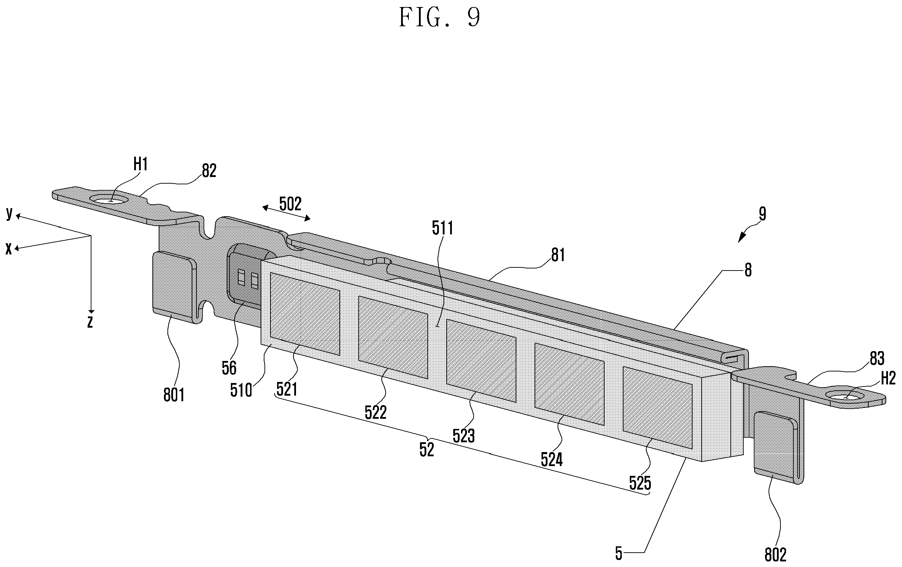

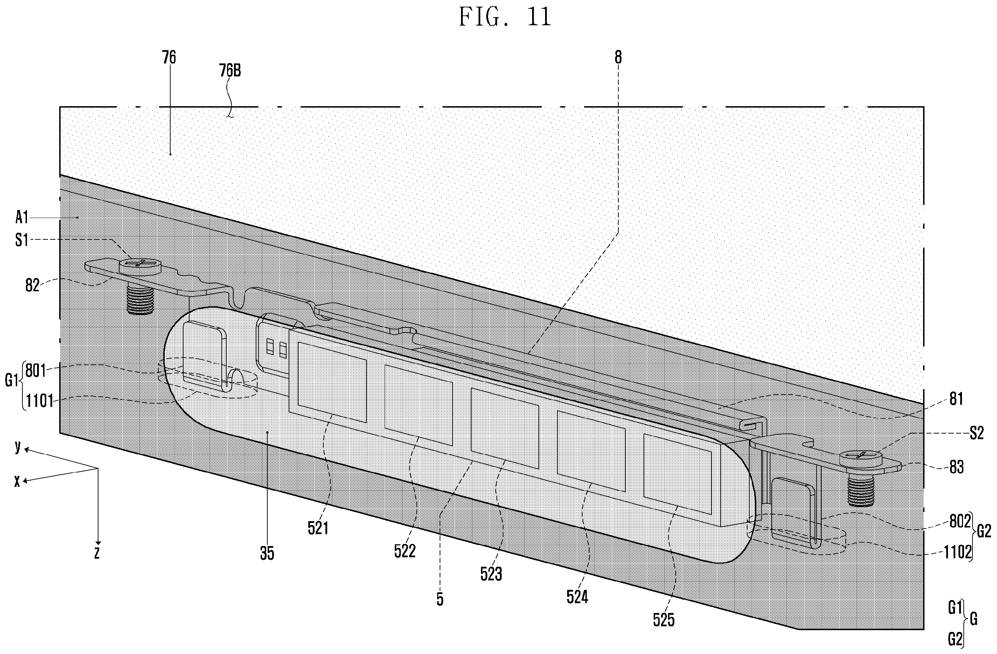

FIGS. 7 and 8 are exploded perspective views of an electronic device 3 according to an embodiment of the disclosure. FIG. 9 is a perspective view of an antenna module assembly 9 according to an embodiment of the disclosure. FIG. 10 is a view illustrating a combination of a frame 701, a battery 76, an antenna module assembly 9, a flexible printed circuit board 1000, and a second adhesive member (or a second bonding member) 1202 according to an embodiment of the disclosure. FIG. 10 may illustrate at least a portion indicated by "I" in FIG. 8. FIG. 11 is a perspective view illustrating a combination of the frame 701, the antenna module assembly 9, and the battery 76 according to an embodiment of the disclosure.

Referring to FIGS. 7 to 11, the electronic device 3 may include a front plate 31, a rear plate 32, a side 33, a first support portion 71, a second support portion 72, a third support portion 73, a display module 401, a first printed circuit board 74, a second printed circuit board 75, a battery 76, an antenna module assembly 9, a first screw S1, a second screw S2, a flexible printed circuit board 1000, and/or a second adhesive member (or bonding member) 1202. In various embodiments, the electronic device 3 may omit some of the above components or additionally include other components.

According to an embodiment, the first support portion 71 may be at least partially positioned between the front plate 31 and the rear plate 32. The first support portion 71 may be connected to the side 33. The first support portion 71 may include a metallic material and/or a non-metallic material (e.g., a polymer).

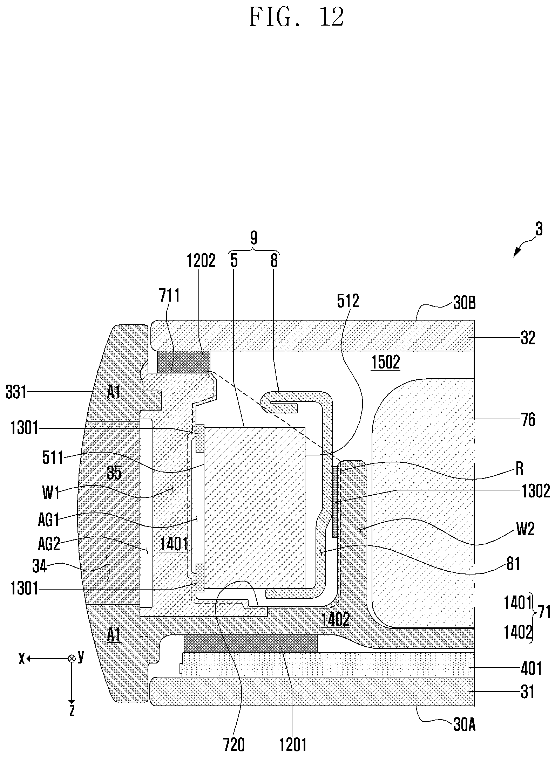

According to an embodiment, the first support portion 71 may include a first support surface 71A corresponding to the front plate 31, and a second support surface 71B corresponding the rear plate 32 and provided opposite to the first support surface 71A. The electronic device 3 may include a first space (not separately illustrated) between the first support surface 71A and the front plate 31 and a second space (e.g., the second space 1502 of FIGS. 12 to 16) between the second support surface 71B and the rear plate 32. A component such as the display module 401 may be disposed on the first support surface 71A within the first space. Components such as the first camera 402, the second camera 403, the third camera 404, the second support portion 72, the third support portion 73, the first printed circuit board 74, the second printed circuit board 75, the battery 76, or the antenna module assembly 9 may be disposed on the second support surface 71B within the second space.

According to an embodiment, the first support surface 71A of the first support portion 71 may provide a front seating portion on which one or more components are stably disposed or supported. The front seating portion may be provided by a combination of surface areas having different heights.

According to an embodiment, the second support surface 71B of the first support portion 71 may provide a rear seating portion on which one or more components are stably disposed or supported. The rear seating portion may be provided with a combination of surface areas having different heights.

According to an embodiment, a combination of the first support portion 71 and the side 33 may provide a frame (or a frame structure or a framework) 701 of the electronic device 3. An integrated frame 701 that provides the first support portion 71 and the side 33 may be provided.

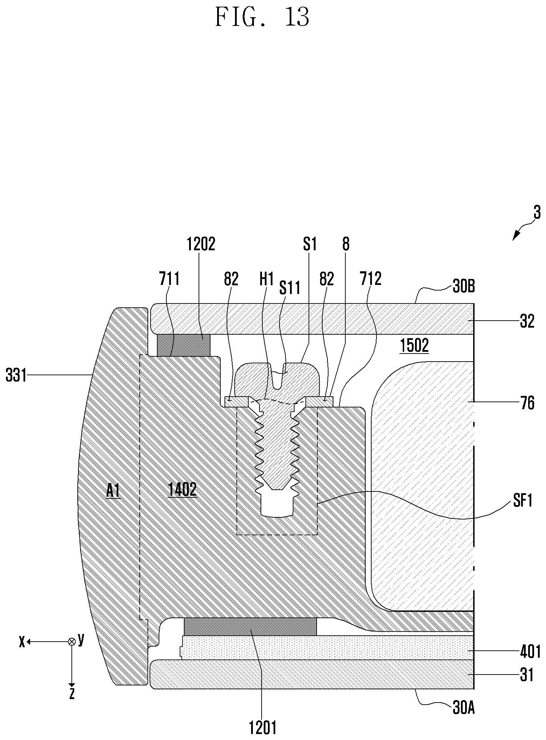

According to an embodiment, the first support portion 71 may include a non-conductor (e.g., the non-conductor 1401 of FIG. 12) that includes one or more non-conductive portions and a conductor (e.g., the conductor 1402 of FIGS. 12 and 13) that is connected to the non-conductor and includes one or more conductive portions.

According to an embodiment, the conductor (e.g., the conductor 1402 of FIG. 13) of the first support portion 71 may be connected to the side surface metal A of the side 33.

According to an embodiment, an integrated metal structure including the conductor (e.g., the conductor 1402 of FIG. 13) of the first support portion 71 and the side surface metal A of the side 33 may be provided. The conductor of the first support portion 71 and the side surface metal A of the side 33 may include the same metal material.

According to an embodiment, the non-conductor (e.g., the non-conductor 1401 of FIG. 12) of the first support portion 71 may be connected to the plurality of insulation portions B1, B2, B3, B4, B5, and B6 of the side 33.

According to an embodiment, an integrated non-metallic structure including the non-conductor (e.g., the non-conductor 1401 of FIG. 12) of the first support portion 71 and the plurality of insulation portions B1, B2, B3, B4, B5, and B6 of the side 33 may be provided. The non-conductor of the first support portion 71 and the plurality of insulation portions B1, B2, B3, B4, B5, and B6 of the side 33 may include the same non-metallic material.

According to an embodiment, various electronic components such as the display 401, the first printed circuit board 74, the second printed circuit board 75, or the battery 76, or various members related to the electronic components may be disposed on or supported by the frame 701 or the first support portion 71.

According to various embodiments, the first support portion 71 may be referred to by various other terms such as "bracket," "first support element," "first support member," or "first support structure."

According to various embodiments, the first support portion 71 may be interpreted as a portion of the housing 30 (see FIG. 3).

According to an embodiment, the display module 401 may be positioned between the first support portion 71 and the front plate 31. The display module 401 may be disposed on (or coupled to) the front plate 31 and/or the first support portion 71.

According to an embodiment, the display module 401 may be coupled to the front plate 31 via an optically transparent adhesive member (or optically transparent adhesive material) such as optical clear resin (OCA), optical clear resin (OCR), or super view resin (SVR) (not separately illustrated).

According to an embodiment, the first printed circuit board 74 and the second printed circuit board 75 may be disposed on (or coupled to) the first support portion 71 between the first support portion 71 and the rear plate 32.

According to an embodiment, the battery 76 may be disposed on the first support portion 71 between the first support portion 71 and the rear plate 32.

According to an embodiment, a plurality of electronic components may be electrically connected to the first printed circuit board 74. Some of the plurality of electronic components may be disposed on the first printed circuit board 74. The others of the plurality of electronic components may be electrically connected to the first printed circuit board 74 via an electrical path such as a flexible printed circuit board or a cable. The plurality of electronic components may include, for example, the display module 401, a second microphone (not separately illustrated) corresponding to the second microphone hole 409 (see FIG. 3), the first camera module 402, the second camera module 403, the third camera module 404, the fourth camera module 405, the first light-emitting module 406 (see FIG. 3), the first sensor module 407 (see FIG. 3), the first key input module 412, or the second key input module 413.

According to an embodiment, the second printed circuit board 75 may be electrically connected to the first printed circuit board 74 via an electrical path such as a flexible printed circuit board.

According to an embodiment, a plurality of electronic components may be electrically connected to the second printed circuit board 75. Some of the plurality of electronic components may be disposed on the second printed circuit board 75. The others of the plurality of electronic components may be electrically connected to the second printed circuit board 75 via an electrical path such as a flexible printed circuit board or a cable. The plurality of electronic components may include, for example, a first microphone (not separately illustrated) corresponding to the first microphone hole 408, a first speaker (not separately illustrated) corresponding to the first speaker hole 410, a first connection terminal 414, or a second connection terminal (not separately illustrated) corresponding to the cover member 415.

According to an embodiment, the first printed circuit board 74 and the second printed circuit board 75 may be spaced apart from each other with the battery 76 interposed therebetween when viewed from above the rear plate 32 (e.g., in the +z-axis direction).

According to an embodiment, when viewed from above the rear plate 32, the first printed circuit board 74 may be at least partially positioned between the third side 333 (see FIG. 3) and the battery 76. When viewed from above the rear plate 32, the second printed circuit board 75 may be at least partially positioned between the fourth side 334 (see FIG. 4) and the battery 76.

According to various embodiments, when viewed from above the rear plate 32, the first printed circuit board 74 may further include a protrusion (not separately illustrated) extending between the first side 331 and the battery 76 or between the second side 332 and the battery 76. The protrusion may be electrically connected to the second printed circuit board 75 via an electrical path such as a flexible printed circuit board.

According to various embodiments, an integrated printed circuit board (not separately illustrated) that replaces the first printed circuit board 74 and the second printed circuit board 75 may be provided. The integrated printed circuit board may include, for example, a first board portion positioned between the third side 333 (see FIG. 3) and the battery 76 and a second board portion positioned between the fourth side 334 (see FIG. 3) and the battery 76 when viewed from above the rear plate 32, and may include a third board portion interconnecting the first board portion and the second board portion. The third board portion may be positioned between the first side 331 and the battery 76, or between the second side 332 (see FIG. 3) and the battery 76 when viewed from above the rear plate 32. The third portion may be implemented substantially rigid or flexible.

According to various embodiments, although not separately illustrated, the first printed circuit board 74 or the second printed circuit board 75 may include a primary PCB (or a main PCB), a secondary PCB (or a sub-PCB), and/or an interposer substrate. When viewed from above the rear plate 32, the primary PCB and the secondary PCB may overlap. The interposer substrate may be disposed between the primary PCB and the secondary PCB and may electrically connect the primary PCB and the secondary PCB.

According to an embodiment, the battery 76 is a device that supplies power to at least one component of the electronic device 3, and may include, for example, a non-rechargeable primary battery, a rechargeable secondary battery, or a fuel cell.

According to an embodiment, a conductor (not separately illustrated) included in the first support portion 71 may provide electromagnetic shielding. The conductor included in the first support portion 71 may reduce or prevent electromagnetic influence (e.g., electromagnetic interference (EMI)) on the display module 401, the first printed circuit board 74, the second printed circuit board 75, the battery 76, or various other electrical components. The conductor included in the first support portion 71 may reduce or prevent electromagnetic influence between any two components.

According to an embodiment, the conductor (not separately illustrated) included in the first support portion 71 may be electrically connected to a first ground plane (or first ground area) (not separately illustrated) included in the first printed circuit board 74 via a flexible conductive member (or flexible conductive portion or flexible conductive component) positioned between the first support portion 71 and the first printed circuit board 74. The flexible conductive member may include, for example, a conductive clip (e.g., a conductive structure including an elastic structure), a pogo pin, a spring, a conductive foam, a conductive rubber, a conductive tape, or a conductive connector.

According to an embodiment, the conductor (not separately illustrated) included in the first support portion 71 may be electrically connected to a second ground plane (or second ground area) (not separately illustrated) included in the second printed circuit board 75 via a flexible conductive member (or flexible conductive portion or flexible conductive component) positioned between the first support portion 71 and the second printed circuit board 75.

According to an embodiment, the first ground plane of the first printed circuit board 74 and the second ground plane of the second printed circuit board 75 may be electrically connected via an electrical connection member (e.g., a flexible printed circuit board) (not separately illustrated) that electrically connects the first printed circuit board 74 and the second printed circuit board 75.

According to an embodiment, a combination of the conductor (not separately illustrated) included in the first support portion 71, the first ground plane (not separately illustrated) of the first printed circuit board 74, and the second ground plane (not separately illustrated) of the second printed circuit board 75 may be defined or interpreted as a ground (or ground structure) of the electronic device 3.

According to an embodiment, the second support portion (or a second support element, a second support member, or a second support structure) 72 may be positioned between the first support portion 71 and the rear plate 32. At least a portion of the first printed circuit board 74 may be positioned between the first support portion 71 and the second support portion 72, and the second support portion 72 may protect the first printed circuit board 74. The second support portion 72 may be coupled to the first support portion 71 and/or the first printed circuit board 74 through screw fastening or various other methods.

According to an embodiment, the third support portion (or a third support element, a third support member, or a third support structure) 73 may be positioned between the first support portion 71 and the rear plate 32. At least a portion of the second printed circuit board 75 may be positioned between the first support portion 71 and the third support portion 73, and the third support portion 73 may protect the second printed circuit board 75. The third support portion 73 may be coupled to the first support portion 71 and/or the second printed circuit board 75 through screw fastening or various other methods.

According to an embodiment, the third support portion 73 may be at least partially positioned to be spaced apart from the second support portion 72 with the battery 76 therebetween when viewed from above the rear plate 32.

According to various embodiments, the frame 701 may be defined or interpreted as the "front case" of the electronic device 3, and the second support portion 72 and/or the third support portion 73 may be defined or interpreted as the "rear case" of the electronic device 3.

According to various embodiments, the second support portion 72 and/or the third support portion 73 may be interpreted as a portion of the housing 30 (see FIG. 3).

According to various embodiments, an integrated support portion (not separately illustrated) that replaces the second support portion 72 and the third support portion 73 may be provided.

According to an embodiment, the second support portion 72 or the third support portion 73 may include a metallic material and/or a non-metallic material (e.g., a polymer).

According to an embodiment, at least one conductive portion (e.g., the first conductive portion A1, the second conductive portion A2, the third conductive portion A3, the fourth conductive portion A4, or the fifth conductive portion A5) included in the side 33 may be configured to operate as an antenna radiator. The at least one conductive portion included in the side 33 may be electrically connected to a wireless communication circuit (e.g., the wireless communication module 192 of FIG. 1) disposed on the first printed circuit board 74.

According to various embodiments, the second support portion 72 or the third support portion 73 may include a non-conductor (not separately illustrated) made of a non-metallic material, and at least one conductive pattern (not separately illustrated) disposed on the non-conductor. The at least one conductive pattern may be disposed on the non-conductor through, for example, laser direct structuring (LDS). The LDS may be a method of drawing a pattern on a non-conductor by using a laser and plating a conductive material such as copper or nickel on the pattern to form a conductive pattern. At least one conductive pattern included in the second support portion 72 or the third support portion 73 may be configured to operate as an antenna radiator. The at least one conductive pattern included in the third support portion 73 may be electrically connected to a wireless communication circuit (e.g., the wireless communication module 192 in FIG. 3) disposed on the first printed circuit board 74.

According to an embodiment, the wireless communication circuit (e.g., the wireless communication module 192 of FIG. 1) may process a transmission signal or a reception signal in at least one selected or predetermined frequency band via at least one antenna radiator (e.g., at least one conductive portion included in the side 33, or at least one conductive pattern included in the second support portion 72 or the third support portion 73). The selected or predetermined frequency band may include, for example, at least one of a low band (LB) (about 600 MHz to about 1 GHz), a middle band (MB) (about 1 GHz to about 2.3 GHz), a high band (HB) (about 2.3 GHz to about 2.7 GHz), or an ultra-high band (UHB) (about 2.7 GHz to about 6 GHz). The predetermined frequency band may include various other frequency bands.

According to an embodiment, the antenna module assembly 9 may include an antenna module 5 and an antenna module bracket 8.

According to an embodiment, the antenna module 5 may be disposed on or coupled to the antenna module bracket 8.

According to an embodiment, the antenna module 5 may be disposed on or coupled to the antenna module bracket 8 via an adhesive material (or bonding material) (not separately illustrated). For example, a heat-responsive adhesive material (or heat-responsive bonding material), a photo-responsive adhesive material (or photo-responsive bonding material), a general adhesive or general bonding material), or a double-sided tape may be disposed between the antenna module 5 and the antenna module bracket 8.

According to various embodiments, the antenna module 5 may be disposed on or coupled to the antenna module bracket 8 via a screw (not separately illustrated).

According to various embodiments, the antenna module 5 may be disposed on or coupled to the antenna module bracket 8 via snap-fits. The antenna module bracket 8 may include, for example, one or more hooks (not separately illustrated). The one or more hooks may be fastened to the antenna module 5 to prevent the antenna module 5 from being separated from the antenna module bracket 8.

According to an embodiment, the antenna module bracket 8 may be a support element (or support member) or a connecting element (or connecting member) that connects the antenna module 5 and the first support portion 71. The antenna module 5 may be stably and securely connected to the first support portion 71 via the antenna module bracket 8.

According to an embodiment, for external impacts such as the dropping of the electronic device 3, the antenna module bracket 8 may suppress or prevent the influence of the external impacts on the antenna module 5.

According to various embodiments, the antenna module assembly 9 may include a flexible member of a flexible material (or an elastic member of an elastic material) (not separately illustrated) or a buffering member of a buffering material (not separately illustrated) disposed between the antenna module 5 and the antenna module bracket 8. The flexible member (or elastic member) or the buffering member may reduce or prevent the influence of external impacts, such as the dropping of the electronic device 3, on the antenna module 5. The flexible member (or elastic member) or the buffering member may suppress or prevent the separation of the antenna module 5 and the antenna module bracket 8 due to external impacts such as the dropping of the electronic device 3.

According to an embodiment, an adhesive material (or bonding material) disposed between the antenna module 5 and the antenna module bracket 8 (not separately illustrated) may not only couple the antenna module 5 and the antenna module bracket 8 but also suppress or prevent the influence of external impacts on the antenna module 5. The adhesive material (or bonding material) disposed between the antenna module 5 and the antenna module bracket 8 may include a buffering material.

According to various embodiments, the electronic device 3 may include a flexible member of a flexible material (or an elastic member of an elastic material) (not separately illustrated) or a buffering member of a buffering material (not separately illustrated) between the antenna module assembly 9 and the first support portion 71. The flexible member (or elastic member) or the buffering member may reduce or prevent the influence of external impacts, such as the dropping of the electronic device 3, on the antenna module 5. The flexible member (or elastic member) or the buffering member may suppress or prevent the separation of the antenna module 5 and the antenna module bracket 8 due to external impacts such as the dropping of the electronic device 3.

According to an embodiment, the antenna module assembly 9 may be positioned between the first support portion 71 and the rear plate 32.

According to an embodiment, the antenna module bracket 8 may be provided as an integral metallic body (or metal structure) including one or more bended portions.

According to an embodiment, the antenna module bracket 8 may be implemented through a processing method such as computer numerical control (CNC), die casting, or pressing.

According to an embodiment, the antenna module bracket 8 may include titanium, amorphous alloy, metal-ceramic composite material (e.g., cermet), or stainless steel.

According to various embodiments, the antenna module bracket 8 may include magnesium, magnesium alloy, aluminum, aluminum alloy, zinc alloy, or copper alloy. The antenna module bracket 8 may include various other metallic materials.

According to an embodiment, the antenna module bracket 8 may be coupled to the first support portion 71 through screw fastening.

According to an embodiment, the antenna module bracket 8 may include a first screw hole H1 corresponding to a first screw S1 and/or a second screw hole H2 corresponding to a second screw S2.

According to an embodiment, the first support portion 71 may include a first screw fastening portion (or first boss) SF1 corresponding to the first screw hole H1 **of** the antenna module bracket 8 and/or a second screw fastening portion (or second boss) SF2 corresponding to the second screw hole H2 of the antenna module bracket 8. The screw fastening portion may include a female thread capable of being fastened with the male thread of a screw.

According to an embodiment, the antenna module bracket 8 may include a first portion 81, a second portion 82, a third portion 83, a first insert 801, and/or a second insert 802.

According to an embodiment, the antenna module 5 may be disposed on or coupled to the first portion 81.

According to various embodiments, the first portion 81 of the antenna module bracket 8 may include an opening (not separately illustrated) or a recess (not separately illustrated) in which a component disposed on the second surface 512 of the antenna module 5 (e.g., the communication circuit 54 or the power management circuit 55) may be positioned.

According to an embodiment, the second portion 82 of the antenna module bracket 8 may extend from the first portion 81. The second portion 82 may include the first screw hole H1.

According to an embodiment, the third portion 83 of the antenna module bracket 8 may extend from the first portion 81. The third portion 83 may include the second screw hole H2.

According to an embodiment, when the second portion 82 is coupled to the first screw fastening portion SF1 of the first support portion 71 by the first screw S1, and the third portion 83 is coupled to the second screw fastening portion SF2 of the first support portion 71 by the second screw S2, the relative position between the first support portion 71 and the first portion 81 may be provided such that the first surface 511 of the antenna module 5 faces the non-conductive portion 35 of the side 33.

According to an embodiment, the relative position where the second portion 82 including the first screw hole H1 extends from the first portion 81, and the relative position where the third portion 83 including the second screw hole H2 extends from the first portion 81 may be provided to stably maintain the first portion 81, in which the antenna module 5 is disposed, against external impacts such as the dropping of the electronic device 3.

According to an embodiment, when viewed from above the rear plate 32 or from above the first surface 511 of the antenna module 5, the second portion 82 and the third portion 83 may be positioned on opposite sides of the antenna module 5.

According to an embodiment, to reduce the impact on the antenna radiation performance or coverage of the antenna module 5, the antenna module bracket 8 (or the first portion 81) may be implemented such that, when viewed from above the first surface 511 of the antenna module 5, it extends forward of the first surface 511 and does not overlap the first surface 511 or the antenna array 52.

According to various embodiments, the antenna module bracket 8 may further include a fourth portion (not separately illustrated) extending from the first portion 81. The fourth portion may protrude in the first direction (the +x-axis direction), in which the first surface 511 is oriented, with respect to the first surface 511 of the antenna module 5. The fourth portion may form an acute angle or a right angle with the first surface 511. When the fourth portion forms an acute angle or an obtuse angle with the first surface 511, the fourth portion may overlap the first surface 511 or the antenna array 52 when viewed from above the first surface 511. The fourth portion may affect the electromagnetic waves (or electromagnetic wave energy) radiated from the antenna module 5 and may change the coverage (or beam coverage). For example, the electromagnetic waves radiated from the antenna module 5 may be reflected by the fourth portion, causing a change in the propagation direction, and coverage based on this may be provided. The fourth portion may be interpreted as a "reflector."

According to various embodiments, the fourth portion of the antenna module bracket 8 may further include a plurality of openings. The plurality of openings may be positioned to allow some of the electromagnetic waves (or electromagnetic wave energy) radiated from the antenna module 5 to pass therethrough. **In** various embodiments, the plurality of openings may be positioned in a one-to-one correspondence with the plurality of antenna elements 521, 522, 523, 524, and 525. **In** various embodiments, the antenna module bracket 8 may further include a non-conductive dielectric material disposed in the plurality of openings included in the fourth portion. The non-conductive dielectric material may have a permittivity that is capable of reducing the impact on the antenna radiation performance or coverage. The non-conductive dielectric material may include, for example, a low-permittivity material.

According to various embodiments, the opening provided in the first metal portion A1 and the non-conductive portion corresponding to the opening may be provided in various other forms (e.g., refer to the exemplary embodiments 610, 620, or 630 of FIG. 6) that are capable of reducing the impact on the coverage, corresponding to the coverage provided by the combination of the antenna module 5 and the fourth portion of the antenna module bracket 8.

According to an embodiment, the flexible printed circuit board 1000 may electrically connect the antenna module 5 and the first printed circuit board 74.

According to an embodiment, the antenna module 5 may include a connector 56 disposed on the antenna module bracket 8. The connector 56 may be electrically connected to the antenna structure 51. The flexible printed circuit board 1000 may be electrically connected to the connector 56.

According to an embodiment, the first support portion 71 may include a recess R corresponding to the antenna module assembly 9. The antenna module assembly 9 may be inserted into the recess R.

According to an embodiment, the first support portion 71 may include a first wall W1 and a second wall W2. The first wall W1 and the second wall W2 may be provided in the form of protrusions extending in a direction toward the rear plate 32. The first wall W1 may be spaced apart from the second wall W2 in the direction in which the first surface 511 of the antenna module 5 is oriented. The recess R of the first support portion 71 may include a spacing between the first wall W1 and the second wall W2. The antenna module 5 may be inserted between the first wall W1 and the second wall W2. The first portion 81 of the antenna module bracket 8, where the antenna module 5 is disposed, may be inserted between the first wall W1 and the second wall W2.

According to an embodiment, when viewed from above the first surface 511 of the antenna module 5, the first wall W1 may overlap the first surface 511.

According to an embodiment, the first wall W1 may be coupled to the first side 331.

According to an embodiment, when viewed from above the first surface 511 of the antenna module 5, the non-conductive portion 35 may overlap the first wall W1.

According to an embodiment, the first wall W1 may be included in the RF window area of the antenna module 5. The first wall W1 may include a non-conductive material. Electromagnetic waves transmitted (or radiated) from the antenna module 5 may pass through the first wall W1 and the non-conductive portion 35 to propagate to the exterior of the electronic device 3. Electromagnetic waves transmitted from the exterior of the electronic device 3 may pass through the non-conductive portion 35 and the first wall W1 to be received (or detected) by the antenna module 5.

According to an embodiment, the first wall W1 may have a permittivity capable of reducing the impact on the antenna radiation performance (or electromagnetic wave transmission/reception performance) or the coverage (or beam coverage) of the antenna module 5.

According to various embodiments, the first wall W1 may be interpreted as a separate element from the first support portion 71 and as a portion of the first side 331.

According to an embodiment, when viewed from above the second surface 512 of the antenna module 5 (see FIG. 5), the second wall W2 may overlap the second surface 512.

According to an embodiment, the second wall W2 may support the antenna module 5.

According to an embodiment, a portion of the first portion 81 included in the antenna module bracket 8 may be positioned between the antenna module 5 and the second wall W2.

According to an embodiment, the second wall W2 may support the first portion 81 of the antenna module bracket 8.

According to an embodiment, when viewed from above the rear plate 32, the antenna module assembly 9 may be at least partially positioned between the first side 331 and the battery 76.

According to an embodiment, the second support surface 71B of the first support portion 71 may include a battery seating portion (not separately illustrated). The battery seating portion may provide a recess in which the battery 76 is fitted and accommodated. The battery 76 may include a battery front surface (not separately illustrated) facing the front plate 31, a battery rear surface 76B facing the rear plate 32, and a battery side surface (not separately illustrated) connecting the battery front surface and the battery rear surface 76B. According to an embodiment, the battery seating portion may include a battery support wall BW (see FIG. 10) that at least partially surrounds the battery side surface when viewed from above the rear plate 32. The battery seating portion may include a recess surrounded by the battery support wall BW in the second support surface 71B of the first support portion 71.

According to an embodiment, the second wall W2 may be a portion of the battery support wall BW.

According to an embodiment, the first support portion 71 may include a third surface 710. The third surface 710 may be at least partially positioned along the side 33. The third surface 710 may be positioned adjacent to the side 33. The third surface 710 may extend from the boundary between the surface provided by the side 33 and the surface provided by the first support portion 71.

According to an embodiment, the third surface 710 of the first support portion 71 may include a first surface area 711, a second surface area 712, and/or a third surface area 713.

According to an embodiment, the first surface area 711 of the third surface 710 may be connected to the boundary between the surface provided by the side 33 and the surface provided by the first support portion 71.

According to an embodiment, the first surface area 711 of the third surface 710 may include a plane substantially facing the rear plate 32 or the rear surface 30B of the electronic device 3 illustrated in FIG. 3.

According to an embodiment, the first surface area 711 of the third surface 710 may include a plane substantially perpendicular to the first surface 511 of the antenna module 5.

According to an embodiment, a second adhesive member 1202 (or a second bonding member 1202) of an adhesive material that bonds the first support portion 71 and the rear plate 32 may be at least partially disposed on the first surface area 711 of the third surface 710.

According to an embodiment, the first screw fastening portion SF1 may be provided to correspond to the second surface area 712 of the third surface 710.

According to an embodiment, the second surface area 712 of the third surface 710 may include a plane substantially facing the rear plate 32 or the rear surface 30B of the electronic device 3 illustrated in FIG. 3. The second surface area 712 may include a plane substantially parallel to the first surface area 711.

According to an embodiment, the second surface area 712 of the third surface 710 may include a plane substantially perpendicular to the first surface 511 of the antenna module 5.

According to an embodiment, the second portion 82 of the antenna module bracket 8 including the first screw hole H1 may overlap the second surface area 712 of the third surface 710 when viewed from above the rear plate 32.

According to an embodiment, the second portion 82 of the antenna module bracket 8 including the first screw hole H1 may have a substantially flat plate shape. The second portion 82 may be substantially parallel to the second surface area 712 of the third surface 710.

According to an embodiment, the second portion 82 of the antenna module bracket 8 including the first screw hole H1 may be bent toward the first portion 81 of the antenna module bracket 8, in which the antenna module 5 is disposed.

According to an embodiment, in a direction in which the rear surface 30B of the electronic device 3 (see FIG. 3) is oriented (e.g., the -z-axis direction), the first surface area 711 of the third surface 710 may be provided higher than the second surface area 712 of the third surface 710. The first surface area 711 may be closer to the rear plate 32 than to the second surface area 712. In various embodiments, the second surface area 712 may provide a recess in which the second portion 82 of the antenna module bracket 8, including the first screw hole H1, may be fitted.

According to an embodiment, providing the second surface area 712 lower than the first surface area 711 in a direction in which the rear surface 30B of the electronic device 3 (see FIG. 3) (e.g., the -z axis direction) is oriented may allow the head S11 of the first screw S1 to be spaced apart from the rear plate 32 so as not to press against the rear plate 32.

According to an embodiment, the second screw fastening portion SF2 may be provided to correspond to the third surface area 713 of the third surface 710.

According to an embodiment, the third surface area 713 of the third surface 710 may include a plane substantially facing the rear plate 32 or the rear surface 30B of the electronic device 3 illustrated in FIG. 3. The third surface area 713 may include a plane substantially parallel to the first surface area 711.

According to an embodiment, the third surface area 713 of the third surface 710 may include a plane substantially perpendicular to the first surface 511 of the antenna module 5.

According to an embodiment, the third portion 83 of the antenna module bracket 8 including the second screw hole H2 may overlap the third surface area 713 of the third surface 710 when viewed from above the rear plate 32.

According to an embodiment, the third portion 83 of the antenna module bracket 8 including the second screw hole H2 may have a substantially flat plate shape. The third portion 83 may be substantially parallel to the third surface area 713 of the third surface 710.

According to an embodiment, the third portion 83 of the antenna module bracket 8 including the second screw hole H2 may be bent toward the first portion 81 of the antenna module bracket 8, in which the antenna module 5 is disposed.

According to an embodiment, in a direction in which the rear surface 30B of the electronic device 3 (see FIG. 3) is oriented (e.g., the -z-axis direction), the first surface area 711 of the third surface 710 may be provided higher than the third surface area 713 of the third surface 710. The first surface area 711 may be closer to the rear plate 32 than to the third surface area 713. **In** various embodiments, the third surface area 713 may provide a recess in which the third portion 83 of the antenna module bracket 8, including the second screw hole H2, may be fitted.

According to an embodiment, providing the third surface area 713 lower than the first surface area 711 in a direction in which the rear surface 30B of the electronic device 3 (see FIG. 3) (e.g., the -z axis direction) is oriented may allow the head S21 of the second screw S2 to be spaced apart from the rear plate 32 so as not to press against the rear plate 32.

According to an embodiment, the first screw hole **H1** and the second screw hole H2 of the antenna module bracket 8 may be aligned in the second direction 502 (e.g., the y-axis direction) when viewed from above the rear plate 32.

According to various embodiments, a coupling structure (not separately illustrated) in which the first screw fastening portion SF1 of the first support 71 is fitted into the first screw hole H1 of the antenna module bracket 8 may be provided.

According to various embodiments, a coupling structure (not separately illustrated) in which the second screw fastening portion SF2 of the first support 71 is fitted into the second screw hole H2 of the antenna module bracket 8 may be provided.

According to various embodiments, the second surface area 712 of the third surface 710 may be provided as a first inclined surface (not separately illustrated) forming an obtuse angle with the first surface area 711 of the third surface 710 or forming an acute angle with the first surface 511 of the antenna module 5. The first screw fastening portion SF1 may be positioned on the first inclined surface. The second portion 82 of the antenna module bracket 8, which includes the first screw hole H1, may extend from the first portion 81 of the antenna module bracket 8 to correspond to the first inclined surface. For example, the bent angle of the second portion 82 relative to the first portion 81 may be implemented with an angle (e.g., an obtuse angle) larger than the illustrated example angle (e.g., about 90 degrees).

According to various embodiments, the third surface area 713 of the third surface 710 may be provided as a second inclined surface (not separately illustrated) forming an obtuse angle with the first surface area 711 of the third surface 710 or forming an acute angle with the first surface 511 of the antenna module 5. The first screw fastening portion SF2 may be positioned on the second inclined surface. The third portion 83 of the antenna module bracket 8, which includes the second screw hole H2, may extend from the first portion 81 of the antenna module bracket 8 to correspond to the second inclined surface. For example, the bent angle of the third portion 83 relative to the first portion 81 may be implemented with an angle (e.g., an obtuse angle) larger than the illustrated example angle (e.g., about 90 degrees).

According to various embodiments, although not separately illustrated, the screw fastening structure between the antenna module bracket 8 and the first support 71 is not limited to the illustrated example and may be variously modified.

According to an embodiment, the first insert 801 of the antenna module bracket 8 may extend from the first portion 81 of the antenna module bracket 8. The second insert 802 of the antenna module bracket 8 may extend from the first portion 81 of the antenna module bracket 8.

According to an embodiment, when viewed from above the first surface 511 of the antenna module 5 or from above the rear plate 32, the first insert 801 and the second insert 802 may be positioned on opposite sides of the antenna module 5.

According to an embodiment, the first insert 801 may be positioned to correspond to the second portion 82 including the first screw hole H1.

According to an embodiment, the first insert 801 may extend from one side of the first portion 81 that is closer to the front plate 31 than to the rear plate 32, and the second portion 82 including the first screw hole H1 may extend from the other side of the first portion 81 that is closer to the rear plate 32 than to the front plate 31.

According to an embodiment, the second insert 802 may be positioned to correspond to the third portion 83 including the second screw hole H2.

According to an embodiment, the second insert 802 may extend from one side of the first portion 81 that is closer to the front plate 31 than to the rear plate 32, and the third portion 83 including the second screw hole H2 may extend from the other side of the first portion 81 that is closer to the rear plate 32 than to the front plate 31.

According to an embodiment, the first insert 801 and/or the second insert 802 may be provided to include a hemming structure (or hemming joint).

According to an embodiment, the first insert 801 and the second insert 802 may be spaced apart from each other and aligned in the second direction 502 (e.g., the y-axis direction).

According to an embodiment, the first support portion 71 may include a first groove (or first guide groove) 1101 corresponding to the first insert 801 of the antenna module bracket 8.

According to an embodiment, the first support portion 71 may include a second groove (or second guide groove) 1102 corresponding to the second insert 802 of the antenna module bracket 8. The first insert 801 may be inserted into the first groove 1101. The second insert 802 may be inserted into the second groove 1102.

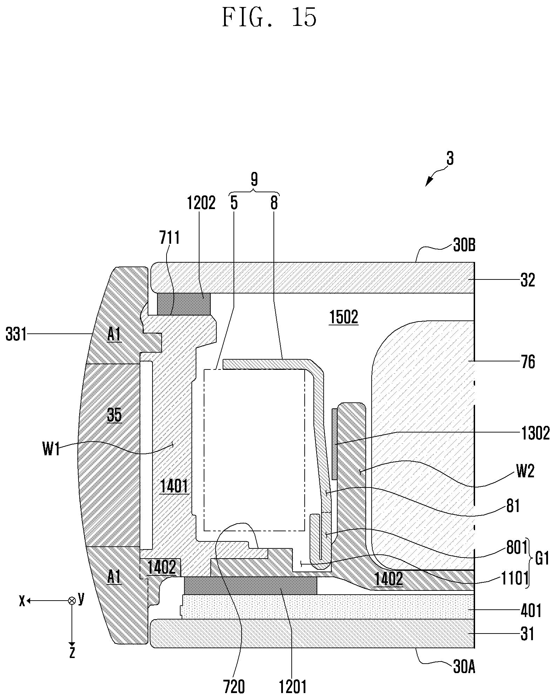

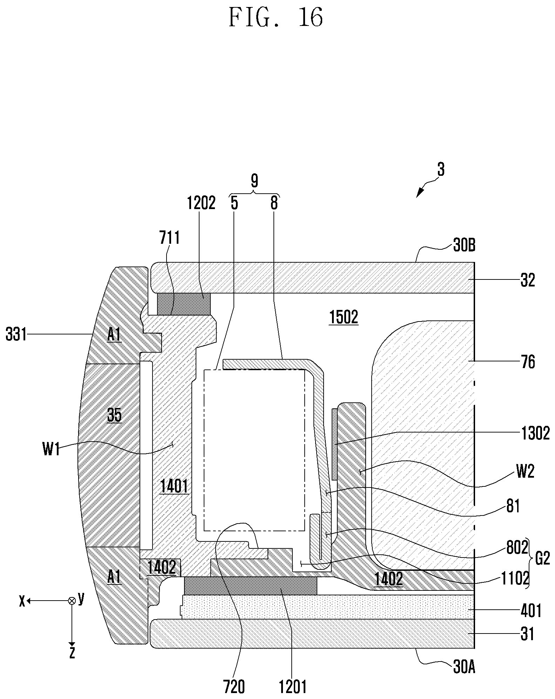

According to an embodiment, the second support surface 71B of the first support portion 71 may include a fourth surface 720 (see FIGS. 15 and 16) connecting the first wall W1 and the second wall W2. The third surface 710 may be provided higher than the fourth surface 720 (see FIGS. 15 and 16) in a direction in which the rear surface 30B (see FIG. 3) of the electronic device 3 is oriented (e.g., the -z-axis direction). The recess R may be provided by a combination of the first wall W1, the second wall W2, and the fourth surface 720 (see FIGS. 15 and 16). The first groove 1101 and the second groove 1102 may be provided on the fourth surface 720 (see FIGS. 15 and 16).

According to an embodiment, the first groove 1101 and the second groove 1102 may be spaced apart from each other and aligned in the second direction 502 (e.g., the y-axis direction).

According to an embodiment, the combination of the first insert 801 and the first groove 1101 and the combination of the second insert 802 and the second groove 1102 may guide the placement of the antenna module assembly 9 in the assembly process of placing the antenna module assembly 9 in the frame 701. The combination of the first insert 801 and the first groove 1101 may be defined or interpreted as a "first guide G1," and the combination of the second insert 802 and the second groove 1102 may be defined or interpreted as a "second guide G2."

According to an embodiment, the first guide G1 and the second guide G2 may be spaced apart from each other and aligned in the second direction 502 (e.g., the y-axis direction).

According to an embodiment, a method of placing the antenna module assembly 9 in the frame 701 may include a first operation, a second operation, and a third operation. In the first operation, the antenna module assembly 9 may be inserted into the recess R of the frame 701. In the second operation, the antenna module assembly 9 may be rotated about the guide G. In the third operation, the antenna module bracket 8 may be coupled to the frame 701 through screw fastening.

According to an embodiment, in the first operation, the antenna module assembly 9 may be inserted into the recess R of the frame 701. In the first operation, the first insert 801 of the antenna module bracket 8 may be inserted into the first groove 1101, and the second insert 802 of the antenna module bracket 8 may be inserted into the second groove 1102.

According to an embodiment, in the second operation, the antenna module assembly 9 inserted into the recess R may be rotated about the guide G. Through the second operation, the first surface 511 of the antenna module 5 may substantially face the non-conductive portion 35 of the first side 331. Through the second operation, the second portion 82 of the antenna module bracket 8 may be positioned to correspond to the second surface area 712 of the first support portion 71, and the third portion 83 of the antenna module bracket 8 may be positioned to correspond to the third surface area 713 of the first support portion 71.

According to an embodiment, the clearance between the first insert 801 and the first groove 1101 of the first guide G1 and the clearance between the second insert 802 and the second groove 1102 of the second guide G2 may be provided to allow the antenna module assembly 9 to rotate in a balanced and stable manner when the second operation is performed.

According to an embodiment, in the third operation, the second portion 82 of the antenna module bracket 8 may be coupled to the first screw fastening portion SF1 of the first support portion 71 by the first screw S1, and the third portion 83 of the antenna module bracket 8 may be coupled to the second screw fastening portion SF2 of the first support portion 71 by the second screw S2.

According to various embodiments, a first opening (not separately illustrated) may be provided to replace the first groove 1101. A second opening (not separately illustrated) may be provided to replace the second groove 1102. The first opening may be a first through-hole penetrating between the first support surface 71A and the second support surface 71B of the first support portion 71. The second opening may be a second through-hole penetrating between the first support surface 71A and the second support surface 71B of the first support portion 71.

According to various embodiments, although not separately illustrated, the positions or number of guides are not limited to the illustrated example and may vary. The first guide G1 and the second guide G2 may be provided, for example, between the second portion 82 and the third portion 83 when viewed from above the first surface 511 of the antenna module 5 or from above the rear plate 32. As another example, a single guide may be provided to replace the first guide G1 and the second guide G2. To allow the antenna module assembly 9 to move in a balanced and stable manner when the second operation is performed, a clearance between the insert and the groove of the single guide and/or a width of the single guide extending in the second direction 502 may be provided.

According to an embodiment, heat emitted from the antenna module 5 may be transferred to the first support portion 71 (or the frame 701) via the antenna module bracket 8 by conduction, in which heat flows from a high-temperature portion to a low-temperature portion. Heat may be emitted from components such as the antenna structure 51 (see FIG. 4), the communication circuit 54, or the power management circuit 55. The first support portion 71 or the frame 701 may be included in a heat spreader of the electronic device 3. The antenna module bracket 8 may serve as a heat transfer path between the antenna module 5 and the first support portion 71. According to various embodiments, the heat spreader of the electronic device 3 may be interpreted as further including the antenna module bracket 8. The dissipation or distribution of heat, emitted from the antenna module 5, to the antenna module bracket 8 and the first support portion 71 (or the frame 701) may prevent overheating of the antenna module 5, thereby suppressing or preventing performance degradation or damage to the antenna module 5.

According to an embodiment, at least a portion of the antenna module 5 may be in physical contact with the antenna module bracket 8. Heat emitted from the antenna module 5 may be transferred to the antenna module bracket 8 through the physical contact portion between the antenna module 5 and the antenna module bracket 8.

According to an embodiment, a heat-conductive material (not separately illustrated), such as a thermal interface material (TIM), may be disposed between the antenna module 5 and the antenna module bracket 8. The heat-conductive material may enhance the performance of transferring heat (e.g., heat transfer performance) from the antenna module 5 to the antenna module bracket 8. In various embodiments, an adhesive material (or bonding material) that couples the antenna module 5 and the antenna module bracket 8 may include a heat-conductive material.

According to an embodiment, at least a portion of the antenna module bracket 8 may be in physical contact with the first support portion 71. Heat may be transferred from the antenna module bracket 8 to the first support portion 71 via the physical contact portion between the antenna module bracket 8 and the first support portion 71.

In various embodiments, a heat-conductive material (not separately illustrated), such as a TIM, may be disposed between the antenna module bracket 8 and the first support portion 71. The heat-conductive material may enhance the performance of heat transfer from the antenna module bracket 8 to the first support portion 71.

According to an embodiment, convective heat transfer, which is a mode of energy transfer between a solid surface and a gas, may act between the antenna module bracket 8 and the internal air of the electronic device 3, and between the first support portion 71 and the internal air of the electronic device 3.

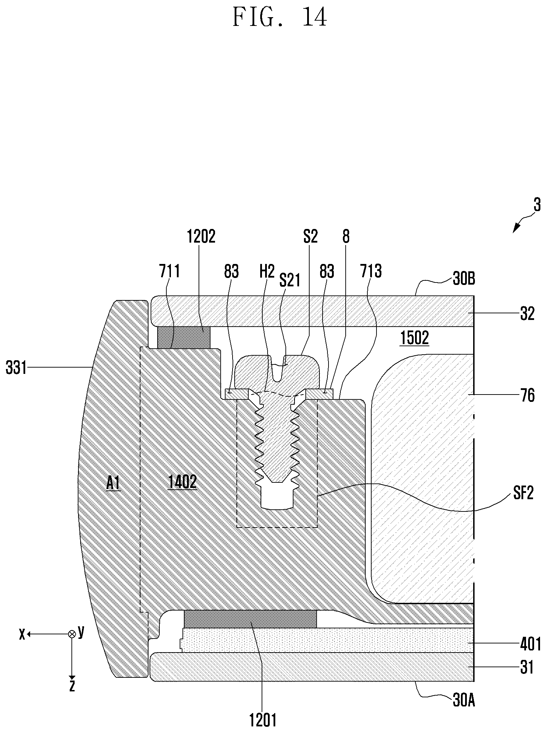

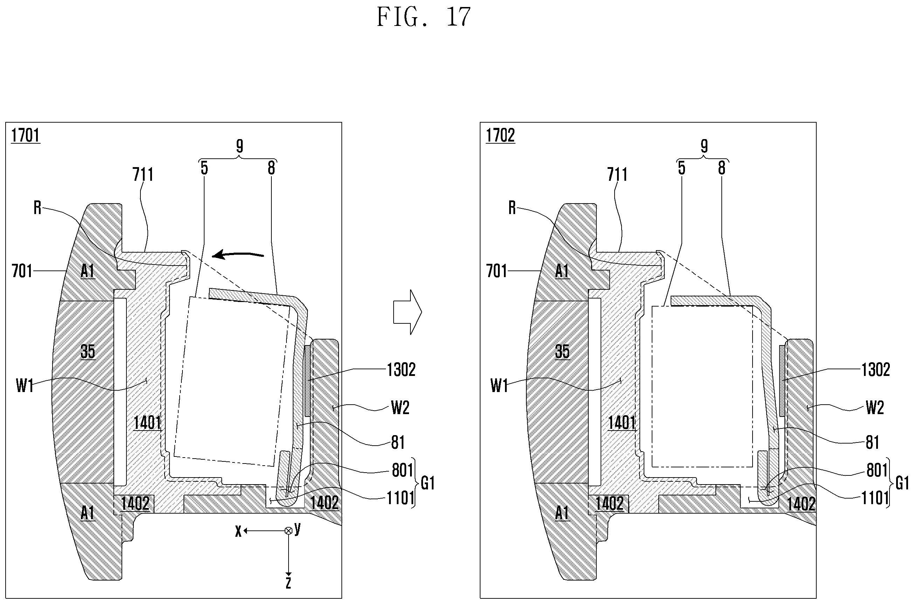

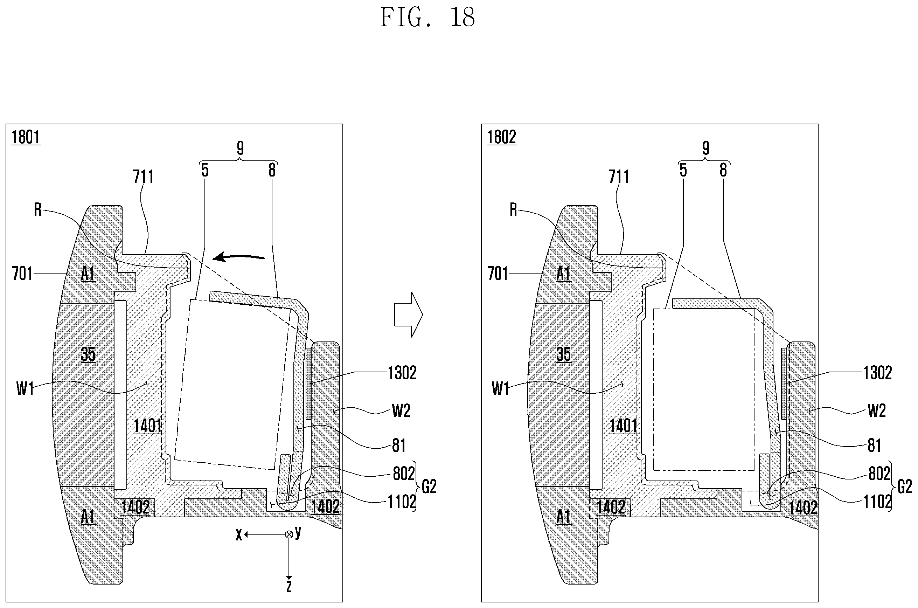

FIG. 12 is a cross-sectional view of an electronic device 3 according to an embodiment of the disclosure taken along line A-A' in FIG. 10. FIG. 13 is a cross-sectional view of the electronic device 3 according to an embodiment taken along line C-C' in FIG. 10. FIG. 13 is a cross-sectional view of the electronic device 3 according to an embodiment of the disclosure taken along line C-C' in FIG. 10. FIG. 14 is a cross-sectional view of an electronic device 3 according to an embodiment of the disclosure taken along line D-D' in FIG. 10. FIG. 15 is a cross-sectional view of the electronic device 3 according to an embodiment of the disclosure taken along line E-E'. FIG. 16 is a cross-sectional view of the electronic device 3 according to an embodiment of the disclosure taken along line F-F'. FIGS. 17 and 18 are cross-sectional views each illustrating the assembly of an antenna module assembly 9 and a frame 701 according to an embodiment of the present disclosure.

Referring to FIGS. 12 to 18, the electronic device 3 may include a front plate 31, a rear plate 32, a first side 331, a first support portion 71, a display module 401, a first adhesive member (or first bonding member) 1201, a second adhesive member (or second bonding member) 1202, an antenna module 5, an antenna module bracket 8, a first screw S1, a second screw S2, a first elastic member (or first elastic element) 1301, and/or a second elastic member (or second elastic element) 1302.

According to an embodiment, the front plate 31 may provide the front surface 30A of the electronic device 3. The rear plate 32 may provide the rear surface 30B of the electronic device 3. The front surface 30A and the rear surface 30B of the electronic device 3 may be oriented in substantially opposite directions.

According to an embodiment, the first side 331 may be provided as a first side surface of the side surface 30C (see FIG. 3) of the electronic device 3. The first side 331 may be provided by a combination of a first metal portion A1 and a non-conductive portion 35. The first metal portion A1 may include an opening 34 corresponding to the antenna module 5. The non-conductive portion 35 may be disposed in the opening 34 of the first metal portion A1.

According to an embodiment, the first support portion 71 may be positioned between the front plate 31 and the rear plate 32. The first support portion 71 may be connected to a side 33 (see FIG. 7). The first support portion 71 may include a non-conductor 1401 that includes at least one non-conductive portion and a conductor 1402 that is connected to the non-conductor 1401 and includes at least one conductive portion.

According to an embodiment, the display module 401 may be positioned between the first support portion 71 and the front plate 31. The display area (or active area) of the display module 401 may be visible through the front plate 31.

According to an embodiment, the first adhesive member (or first bonding member) 1201 may be disposed between the first support portion 71 and the display module 401. The display module 401 may be disposed on the first support portion 71 via the first adhesive member (or first bonding member) 1201.

According to an embodiment, the second adhesive member (or second bonding member) 1202 may be disposed between the first support portion 71 and the rear plate 32. The rear plate 32 may be disposed on the first support portion 71 via the second adhesive member (or second bonding member) 1202.

According to an embodiment, the second adhesive member (or second bonding member) 1202 may be disposed between the rear plate 32 and the first surface area 711 of the first support portion 71.

According to an embodiment, the first surface area 711 may include a plane that is substantially oriented in a direction in which the rear surface 30B of the electronic device 3 is oriented (e.g., the -z axis direction).

According to an embodiment, the antenna module 5 may be connected to the first support portion 71 via the antenna module bracket 8. The antenna module 5 may be disposed on or coupled to the first portion 81 of the antenna module bracket 8. The antenna module 5 and the antenna module bracket 8 may be positioned in a space between the first support portion 71 and the rear plate 32 (e.g., the second space 1502).

According to an embodiment, the second portion 82 of the antenna module bracket 8 extending from the first portion 81 may be fixed to the second surface area 712 of the first support portion 71. The second portion 82 may include the first screw hole H1. The first screw fastening portion SF1 may be provided to correspond to the second surface area 712. Through fastening (e.g., screw fastening) between the first screw S1 and the first screw fastening portion SF1, the second portion 82 may be fixed to the second surface area 712.

According to an embodiment, the third portion 83 of the antenna module bracket 8 extending from the first portion 81 may be fixed to the third surface area 713 of the first support portion 71. The third portion 83 may include the second screw hole H2. The first screw fastening portion SF2 may be provided to correspond to the third surface area 713. Through fastening (e.g., screw fastening) between the second screw S2 and the second screw fastening portion SF2, the third portion 83 may be fixed to the third surface area 713.

According to an embodiment, the second surface area 712 and/or the third surface area 713 may include a plane that is substantially oriented in a direction in which the rear surface 30B of the electronic device 3 is oriented (e.g., the -z axis direction).

According to an embodiment, the second surface area 712 and/or the third surface area 713 may be substantially parallel to the first surface area 711.

According to an embodiment, the second surface area 712 and/or the third surface area 713 may include a plane that is substantially perpendicular to the first surface 511 of the antenna module 5.

According to an embodiment, the second surface area 712 and the third surface area 713 may be provided lower than the first surface area 711 in a direction in which the rear surface 30B of the electronic device 3 is oriented (e.g., the -z axis direction). Providing the second surface area 712 lower than the first surface area 711 in the direction in which the rear surface 30B of the electronic device 3 is oriented may allow the head S11 of the first screw S1 to be spaced apart from the rear plate 32 so as not to press against the rear plate 32. Providing the third surface area 713 lower than the first surface area 711 in the direction in which the rear surface 30B of the electronic device 3 is oriented may allow the head S21 of the second screw S2 to be spaced apart from the rear plate 32 so as not to press against the rear plate 32.

According to an embodiment, the first support portion 71 may include a first wall W1, a second wall W2, and a fourth surface 720. A recess R corresponding to the antenna module assembly 9 in the first support portion 71 may be provided by a combination of the first wall W1, the second wall W2, and the fourth surface 720. The antenna module assembly 9 may be inserted into the recess R.

According to an embodiment, the first wall W1 may be at least partially positioned between the first side 331 and the first surface 511 of the antenna module 5. The first wall W1 may be connected to the first side 331. When viewed from above the first surface 511 of the antenna module 5, the non-conductive portion 35 of the first side 331 may overlap the first wall W1. When viewed from above the first surface 511 of the antenna module 5, the non-conductive portion 35 and the first wall W1 may overlap the first surface 511 of the antenna module 5 or the antenna array 52 of the antenna module 5 (see FIG. 9).

According to an embodiment, the second wall W2 may be positioned to correspond to the second surface 512 of the antenna module 5. When viewed from above the second surface 512 of the antenna module 5, the second wall W2 may overlap the second surface 512.

According to an embodiment, the second wall W2 may support the antenna module 5.

According to an embodiment, a portion of the first portion 81 included in the antenna module bracket 8 may be positioned between the antenna module 5 and the second wall W2.

According to an embodiment, the second wall W2 may support the first portion 81 of the antenna module bracket 8.

According to an embodiment, when viewed from above the rear plate 32, the antenna module assembly 9 may be at least partially positioned between the first side 331 and the battery 76.

According to an embodiment, the second wall W2 may be a portion of the battery support wall BW (see FIG. 10).

According to an embodiment, the non-conductive portion 35 and the first wall W1 may be included in the RF window area of the antenna module 5. The non-conductive portion 35 and the first wall W1 may include a non-conductive material. Electromagnetic waves transmitted (or radiated) from the antenna module 5 may pass through the first wall W1 and the non-conductive portion 35 to propagate to the exterior of the electronic device 3. Electromagnetic waves transmitted from the exterior of the electronic device 3 may pass through the non-conductive portion 35 and the first wall W1 to be received (or detected) by the antenna module 5.

According to an embodiment, the non-conductive portion 35 and the first wall W1 may have a permittivity capable of reducing the impact on the antenna radiation performance (or electromagnetic wave transmission/reception performance) or the coverage (or beam coverage) of the antenna module 5.

According to an embodiment, a first air gap AG1 may be provided between the first wall W1 and the first surface 511 of the antenna module 5. Compared to a comparative example in which substantially no spacing (e.g., the first air gap AG1) is present between the first wall W1 and the first surface 511 of the antenna module 5, the first air gap AG1 may reduce the electromagnetic influence of the first wall W1 on the antenna radiation performance (or electromagnetic wave transmission/reception performance) or the coverage (or beam coverage) of the antenna module 5.

According to an embodiment, a surface of the first wall W1 facing the first surface 511 of the antenna module 5 may include a recess (not separately illustrated). The recess of the first wall W1 may contribute to the provision of the first air gap AG1.

According to various embodiments, a first dielectric material (not separately illustrated) disposed (e.g., filled) in the first air gap AG1 may be provided. The first dielectric material may be included in the RF window area. The first dielectric material may have a permittivity that is capable of reducing the degradation of the antenna radiation performance of the antenna module 5 or a permittivity that does not degrade the antenna radiation performance to a threshold level or lower. The first dielectric material may have a permittivity that has an effect within a range that does not exceed the coverage area intended to be secured by the antenna module 5 or a permittivity that substantially does not affect the coverage of the antenna module 5. The permittivity of the first dielectric material may be, for example, a value that reduces the difference from the permittivity of air (e.g., a low permittivity). In various embodiments, the first dielectric material may include an adhesive material or a bonding material.

According to an embodiment, a second air gap AG2 may be provided between the non-conductive portion 35 and the first wall W1. Compared to a comparative example in which substantially no spacing (e.g., the second air gap AG2) is present between the non-conductive portion 35 and the first wall W1, the second air gap AG2 may reduce the electromagnetic influence of the non-conductive portion 35 or the first wall W1 on the antenna radiation performance (or electromagnetic wave transmission/reception performance) or the coverage (or beam coverage) of the antenna module 5.

According to various embodiments, a second dielectric material (not separately illustrated) disposed (e.g., filled) in the first air gap AG2 may be provided. The second dielectric material may be included in the RF window area. The second dielectric material may have a permittivity that is capable of reducing the degradation of the antenna radiation performance of the antenna module 5 or a permittivity that does not degrade the antenna radiation performance to a threshold level or lower. The second dielectric material may have a permittivity that has an effect within a range that does not exceed the coverage area intended to be secured by the antenna module 5 or a permittivity that substantially does not affect the coverage of the antenna module 5. The permittivity of the second dielectric material may be, for example, a value that reduces the difference from the permittivity of air (e.g., a low permittivity). In various embodiments, the second dielectric material may include an adhesive material or a bonding material.

According to various embodiments, the first wall W1 may include at least one opening (not separately illustrated) that overlaps the first surface 511 of the antenna module 5 or the antenna array 52 (see FIG. 9) when viewed from above the first surface 511. The at least one opening of the first wall W1 may reduce the electromagnetic influence of the first wall W1 on the antenna radiation performance (or electromagnetic wave transmission/reception performance) or the coverage (or beam coverage) of the antenna module 5.

According to various embodiments, the non-conductive portion 35 or the first wall 35 may be implemented as a dielectric lens. A dielectric lens may secure or enhance the antenna radiation performance and/or coverage of the antenna module 5.

According to various embodiments, the non-conductive portion 35 and the first wall 35 may be implemented as a dielectric lens. A dielectric lens may secure or enhance the antenna radiation performance and/or coverage of the antenna module 5.

According to an embodiment, the first elastic member 1301 may be at least partially disposed between the first wall W1 and the antenna module 5. The first elastic member 1301 may be disposed or coupled to the first wall W1 or the antenna module 5. For example, the first elastic member 1301 may be at least partially disposed between the first surface 511 of the antenna module 5 and the first wall W1. The first elastic member 1301 may suppress or prevent the antenna module 5 from colliding with the first wall W1. The first elastic member 1301 may include a buffering material. For external impacts such as the dropping of the electronic device 3, the first elastic member 1301 may suppress or prevent the influence of external impacts on the antenna module 5. During the assembly of placing the antenna module assembly 9 in the frame 701 (see FIGS. 7 and 8), the first elastic member 1301 may suppress or prevent the antenna module 5 from colliding with the first wall W1.

According to an embodiment, the first elastic member 1301 may contribute to providing a spacing (e.g., the first air gap AG1) between the first wall W1 and the antenna module 5.

According to an embodiment, the first elastic member 1301 may be disposed at a position that does not substantially affect the antenna radiation performance or the coverage of the antenna module 5.

According to an embodiment, the first elastic member 1301 may be interpreted as at least a portion of the first dielectric material disposed in the first air gap AG1.

According to an embodiment, the second elastic member 1302 may be disposed between the second wall W2 and the first portion 81 of the antenna module bracket 8. The second elastic member 1302 may be disposed on or coupled to the second wall W2 or the antenna module bracket 8. The second wall W2 may support the first portion 81 of the antenna module bracket 8 via the second elastic member 1302.

According to various embodiments, the second elastic member 1302 may include a heat-conductive material (not separately illustrated). The second elastic member 1302 may enhance the performance of transferring heat (e.g., heat transfer performance) from the antenna module bracket 8 to the first support portion 71.

According to an embodiment, the electronic device 3 may include a first guide G1 provided by a combination of the first insert 801 of the antenna module bracket 8 and the first groove 1101 of the first support portion 71. The electronic device 3 may include a second guide G2 provided by a combination of the second insert 802 of the antenna module bracket 8 and the second groove 1102 of the first support portion 71. During the assembly of the antenna module assembly 9 into the frame 701 (see FIGS. 7 and 8), the first guide G1 and the second guide G2 may guide the placement of the antenna module assembly (see FIGS. 7 and 8).

According to an embodiment, a method of placing the antenna module assembly 9 in the frame 701 may include a first operation, a second operation, and a third operation. In the first operation, the antenna module assembly 9 may be inserted into the recess R of the frame 701. In the second operation, the antenna module assembly 9 may be rotated about the first guide G1 and the second guide G2. In the third operation, the antenna module bracket 8 may be coupled to the frame 701 by the first screw S1 (see FIG. 13) and the second screw S2 (see FIG. 14).

"1701" in FIG. 17 is a cross-sectional view illustrating the antenna module assembly 9 and the frame 701 corresponding to the first guide G1 according to the first operation. "1801" in FIG. 18 is a cross-sectional view illustrating the antenna module assembly 9 and the frame 701 corresponding to the second guide G2 according to the first operation. "1702" in FIG. 17 is a cross-sectional view illustrating the antenna module assembly 9 and the frame 701 corresponding to the first guide G1 according to the second operation. "1802" in FIG. 18 is a cross-sectional view illustrating the antenna module assembly 9 and the frame 701 corresponding to the second guide G2 according to the second operation.

According to an embodiment, in the first operation, the antenna module assembly 9 may be inserted into the recess R of the frame 701. Through the first operation, the first insert 801 of the antenna module bracket 8 may be inserted into the first groove 1101, and the second insert 802 of the antenna module bracket 8 may be inserted into the second groove 1102.

According to an embodiment, in the second operation, the antenna module assembly 9 inserted into the recess R may be rotated about the first guide G1 and the second guide G2. Through the second operation, the second portion 82 of the antenna module bracket 8 may be positioned to correspond to the second surface area 712 of the first support portion 71, and the third portion 83 of the antenna module bracket 8 may be positioned to correspond to the third surface area 713 of the first support portion 71.

According to an embodiment, in the third operation, the second portion 82 of the antenna module bracket 8 may be coupled to the first screw fastening portion SF1 of the first support portion 71 by the first screw S1, and the third portion 83 of the antenna module bracket 8 may be coupled to the second screw fastening portion SF2 of the first support portion 71 by the second screw S2.

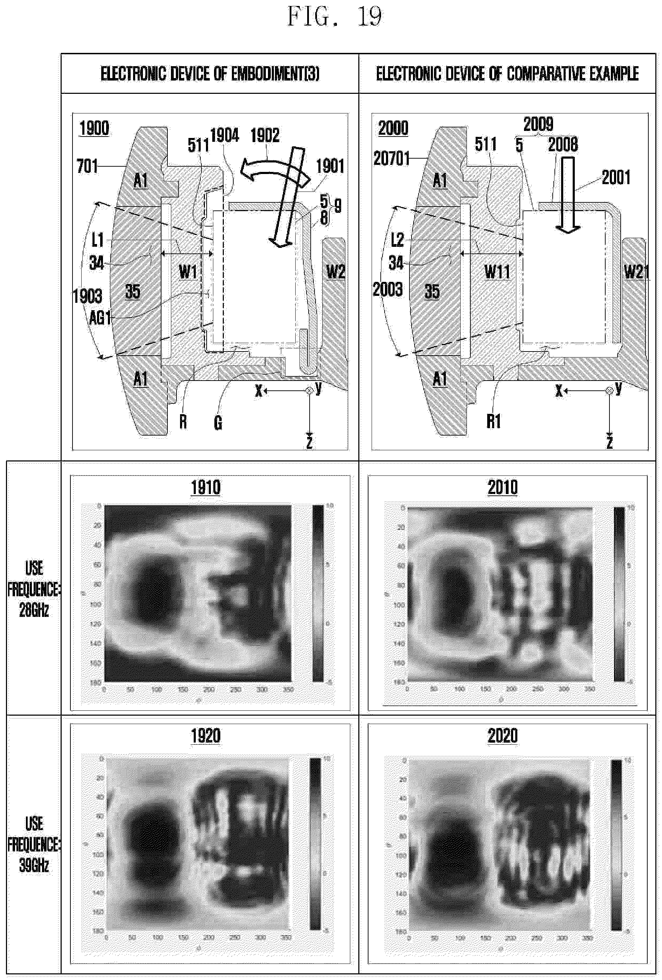

FIG. 19 illustrates a cross-sectional view of an electronic device 3 of an embodiment of the present disclosure (1900), a cross-sectional view of an electronic device of a comparative example (2000), heat maps illustrating electromagnetic wave energy (or wave energy) radiated from the electronic device 3 of the embodiment, and heat maps illustrating electromagnetic wave energy radiated from the electronic device of the comparative example.

Referring to FIG. 19, an electronic device 3 of an embodiment may include a frame 701 and an antenna module assembly 9. The antenna module assembly 9 may include an antenna module 5 and an antenna module bracket 8. A method of placing the antenna module assembly 9 in the frame 701 may include insertion (1901), rotation (1902), and fixation (not separately illustrated). Insertion (1901) may refer to inserting the antenna module assembly 9 into the recess R of the frame 701 so that a guide G (e.g., the first guide G1 of FIG. 17 and the second guide G2 of FIG. 18) is provided. Rotation (1902) may refer to rotating the antenna module assembly 9 about the guide G. Fixation may refer to fixing the antenna module bracket 8 to the frame 701 through screw fastening.

An electronic device according to a comparative example may include a frame 20701 and an antenna module assembly 2009. The antenna module assembly 2009 may include an antenna module 5 and an antenna module bracket 2008. A method of placing the antenna module assembly 2009 in the frame 20701 may include insertion (2001) and fixation (not separately illustrated). Insertion (2001) may refer to inserting the antenna module assembly 2009 into a recess R1 of the frame 20701. Fixation may refer to fixing the antenna module bracket 2008 to the frame 20701 through screw fastening.

Since the method of placing the antenna module assembly 9 in the frame 701 of the electronic device 3 of the embodiment includes the combination of insertion (1901) and rotation (1902), the first wall W1 may more easily provide a recess 1904 in which the antenna module 5 may be inserted closer to the non-conductive portion 35 compared to the first wall W11 of the electronic device of the comparative example.

In the electronic device 3 of the embodiment, the method of placing the antenna module assembly 9 in the frame 701 includes a combination of insertion (1901) and rotation (1902). Accordingly, compared to the electronic device of the comparative example, the distance by which the first surface 511 of the antenna module 5 is spaced apart from the non-conductive portion 35 (or the opening 34 of the first metal portion A1) may be reduced (see "L1" and "L2"). Since the electronic device 3 of the embodiment is capable of reducing the distance between the first surface 511 of the antenna module 5 and the non-conductive portion 35 (or the opening 34 of the first metal portion A1) compared to the electronic device of the comparative example, the electromagnetic influence of the first metal portion A1 on the antenna module 5 may be reduced. In the electronic device 3 of the embodiment, the coverage 1903 of the antenna module 5 may be improved compared to the coverage 2003 of the antenna module 5 in the electronic device of the comparative example.

"1910" represents a heat map indicating wave energy when electromagnetic waves of an operating frequency (or usage frequency) of about 28 GHz are radiated from the antenna module 5 in the electronic device 3 of the embodiment. "2010" represents a heat map indicating wave energy when electromagnetic waves of an operating frequency of about 28 GHz are radiated from the antenna module 5 in the electronic device of the comparative example. By comparing the heat map of "1910" and the heat map of "2010," the electronic device 3 of the embodiment may provide a beam pattern that ensures transmission/reception performance for electromagnetic waves in a more expanded coverage area compared to the electronic device of the comparative example.

"1920" represents a heat map indicating wave energy when electromagnetic waves of an operating frequency (or usage frequency) of about 39 GHz are radiated from the antenna module 5 in the electronic device 3 of the embodiment. "2020" represents a heat map indicating wave energy when electromagnetic waves of an operating frequency of about 39 GHz are radiated from the antenna module 5 in the electronic device of the comparative example. By comparing the heat map of "1920" and the heat map of "2020," the electronic device 3 of the embodiment may provide a beam pattern that ensures transmission/reception performance for electromagnetic waves in a more expanded coverage area compared to the electronic device of the comparative example.

Table 1 illustrates the gain of the antenna module 5 for electromagnetic waves in a first polarization direction at a use frequency (or operating frequency) of about 28 GHz.

**[Table 1]**

| Category | CDF-EIFP [dBm] | |
|---|---|---|
| | CDF 50% | CDF 100% |
| Electronic device 3 of embodiment | 0.45 | 9.63 |
| Electronic device of comparative example | -0.17 | 8.93 |

Referring to FIG. 19 and Table 1, the electronic device 3 of the embodiment may expand coverage compared to the electronic device of the comparative example. For example, based on a cumulative distribution function (CDF) of 50% or 100%, the electronic device 3 of the embodiment may have improved transmission/reception performance for electromagnetic waves in the first polarization direction compared to the electronic device of the comparative example.

Table 2 illustrates the gain of the antenna module 5 for electromagnetic waves in a second polarization direction different from (e.g., perpendicular to) the first polarization direction at a use frequency (or operating frequency) of about 39 GHz.

**[Table 2]**

| Category | CDF-EIFP [dBm] | |
|---|---|---|
| | CDF 50% | CDF 100% |
| Electronic device 3 of embodiment | 0.55 | 11.1 |
| Electronic device of comparative example | 0.89 | 10.36 |

Referring to FIG. 19 and Table 2, the electronic device 3 of the embodiment may expand coverage compared to the electronic device of the comparative example. For example, based on a CDF of 50% or 100%, the electronic device 3 of the embodiment may have improved transmission/reception performance for electromagnetic waves in the second polarization direction compared to the electronic device of the comparative example.

In the electronic device 3 of the embodiment, the placement of the antenna module assembly 9 in the recess R of the frame 701 through a combination of insertion (1901) and rotation (1902) may contribute to maintaining the relative position of the antenna module assembly 9 with respect to the frame 701, even if loosening or relaxation of screw fastening occurs due to external impacts such as the dropping of the electronic device 3 (e.g., the loosening of the first screw S1 or the second screw S2 of FIG. 10). As the relative position between the frame 701 and the antenna module assembly 9 is maintained, the antenna radiation performance or coverage of the antenna module 5 may also be maintained.

According to an exemplary embodiment of the disclosure, an electronic device 3 includes a front plate 31, a rear plate 32, a side surface portion (e.g., the side 33), a support portion (e.g., the first support portion 71), a printed circuit board 510, at least one antenna element (e.g., the plurality of antenna elements 521, 522, 523, 524, and 525), and a bracket (e.g., the antenna module bracket 8). The front plate 31 provides at least a portion of the front surface 30A of the electronic device 3. The rear plate 32 provides at least a portion of the rear surface 30B of the electronic device 3. The side surface portion (e.g., the side 33) provides at least a portion of a side surface 30C of the electronic device 3. The side surface portion (e.g., the side 33) includes a conductive portion (e.g., the first metal portion A1) providing a portion of the side surface 30C and a non-conductive portion 35 providing another portion of the side surface 30C. The support portion (e.g., the first support portion 71) is positioned between the front plate 31 and the rear plate 32. The support portion (e.g., the first support portion 71) is connected to the side surface portion (e.g., side 33). The printed circuit board 510 includes a first surface 511 facing the non-conductive portion 35 and a second surface 512 facing away from the first surface 511. At least one antenna element (e.g., the plurality of antenna elements 521, 522, 523, 524, and 525) is disposed on the first surface 511 or disposed inside the printed circuit board 510 positioned the first surface 511 than to the second surface 512. A bracket 8 connects the printed circuit board 510 and the support portion (e.g., the first support portion 71). The bracket 8 includes a first portion 81 on which the printed circuit board 510 is disposed, and a second portion 82 extending from the first portion 81 and fixed to the support portion (e.g., first support portion 71) by a screw (e.g., the first screw S1). The support portion (e.g., the first support portion 71) includes a wall (e.g., the second wall W2) protruding toward the rear plate 32. The printed circuit board 510 is positioned between the non-conductive portion 35 and the wall (e.g., the second wall W2). The wall (e.g., the second wall W2) supports the first portion 81.

According to an exemplary embodiment of the disclosure, the electronic device 3 may further include a battery 76 disposed on the support portion (e.g., the first support portion 71) between the support portion (e.g., the first support portion 71) and the rear plate 32. The wall (e.g., the second wall W2) may be positioned between the printed circuit board 510 and the battery 76. The wall (e.g., the second wall W2) may support the battery 76.

According to an exemplary embodiment of the disclosure, the electronic device 3 may further include an adhesive member (e.g., the second adhesive member 1202) disposed between the support portion (e.g., first support portion 71) and the rear plate 32. The support portion (e.g., the first support portion 71) may include a third surface 710 at least partially positioned along the side surface portion (e.g., the side 33). The third surface 710 may face the rear plate 32. The third surface 710 may include a first surface area 711 corresponding to an adhesive member (e.g., the second adhesive member 1202) and a second surface area 712 corresponding to the second portion 82. The second portion 82 may be fixed to the second surface area 712 by a screw (e.g., the first screw S1).

According to an exemplary embodiment of the disclosure, the first surface area 711 may be positioned closer to the rear plate 32 than to the second surface area 712.

According to an exemplary embodiment of the disclosure, the support portion (e.g., the first support portion 71) may further include a non-conductive wall (e.g., the first wall W1) at least partially positioned between the non-conductive portion 35 and the first surface 511 and connected to the side surface portion (e.g., the side 33).

According to an exemplary embodiment of the disclosure, the electronic device 3 may further include a first air gap AG1 provided between the non-conductive wall (e.g., the first wall W1) and the first surface 511.

According to an exemplary embodiment of the disclosure, the electronic device 3 may further include a second air gap AG2 provided between the non-conductive portion 35 and the non-conductive wall (e.g., the first wall W1).

According to an exemplary embodiment of the disclosure, the electronic device 3 may further include a dielectric material of an adhesive material disposed in the second air gap AG2.

According to an exemplary embodiment of the disclosure, the non-conductive wall (e.g., the first wall W1) may include a recess into which the printed circuit board 510 is inserted.

According to an exemplary embodiment of the disclosure, the electronic device 3 may further include a first elastic member 1301 positioned between the non-conductive wall (e.g., the first wall W1) and the printed circuit board 510.

According to an exemplary embodiment of the disclosure, the support portion 71 may include a fourth surface 720 connecting the wall (e.g., the second wall W2) and the non-conductive wall (e.g., the first wall W1). The printed circuit board 510 may be inserted into a recess R provided by a combination of the wall (e.g., the second wall W2), the non-conductive wall (e.g., the first wall W1), and the fourth surface 720. The support portion (e.g., the first support portion 71) may include a groove (e.g., the first groove 1101) provided in the fourth surface 720. The bracket 8 may include an insert (e.g., the first insert 801) inserted into the groove (e.g., the first groove 1101).

According to an exemplary embodiment of the disclosure, the insert (e.g., the first insert 801) may include a hemming structure.

According to an exemplary embodiment of the disclosure, the electronic device 3 may further include a second elastic member 1302 positioned between the first portion 81 and the wall (e.g., the second wall W2).

According to an exemplary embodiment of the disclosure, the electronic device 3 may further include a communication circuit 54 disposed on the second surface 512. The communication circuit 54 may be configured to transmit and/or receive a mmWave wireless signal via at least one antenna element (e.g., the plurality of antenna elements 521, 522, 523, 524, and 525).

According to an exemplary embodiment of the disclosure, the electronic device 3 may further include a heat-conductive material disposed between the bracket (e.g., the antenna module bracket 8) and the support portion (e.g., the first support portion 71).

According to an exemplary embodiment of the disclosure, an electronic device 3 includes a front plate 31, a rear plate 32, a side surface portion (e.g., the side 33), a support portion (e.g., the first support portion 71), a printed circuit board 510, at least one antenna element (e.g., the plurality of antenna elements 521, 522, 523, 524, and 525), a communication circuit 54, and a bracket (e.g., the antenna module bracket 8). The front plate 31 provides at least a portion of the front surface 30A of the electronic device 3. The rear plate 32 provides at least a portion of the rear surface 30B of the electronic device 3. The side surface portion (e.g., the side 33) provides at least a portion of a side surface 30C of the electronic device 3. The side surface portion (e.g., the side 33) includes a conductive portion (e.g., the first metal portion A1) providing a portion of the side surface 30C and a non-conductive portion 35 providing another portion of the side surface 30C. The support portion (e.g., the first support portion 71) is positioned between the front plate 31 and the rear plate 32. The support portion (e.g., the first support portion 71) is connected to the side surface portion (e.g., side 33). The printed circuit board 510 includes a first surface 511 facing the non-conductive portion 35 and a second surface 512 facing away from the first surface 511. At least one antenna element (e.g., the plurality of antenna elements 521, 522, 523, 524, and 525) is disposed on the first surface 511 or disposed inside the printed circuit board 510 positioned the first surface 511 than to the second surface 512. The communication circuit 54 is disposed on the second surface 512. The communication circuit 54 is configured to transmit and/or receive a mmWave wireless signal via at least one antenna element (e.g., the plurality of antenna elements 521, 522, 523, 524, and 525). A bracket (e.g., the bracket 8) connects the printed circuit board 510 and the support portion (e.g., the first support portion 71). The bracket (e.g., the antenna module bracket 8) includes a first portion 81 on which the printed circuit board 510 is disposed, and a second portion 82 extending from the first portion 81 and fixed to the support portion (e.g., first support portion 71) by a screw (e.g., the first screw S1). The support portion (e.g., the first support portion 71) includes a wall (e.g., the second wall W2) protruding toward the rear plate 32. The printed circuit board 510 is positioned between the non-conductive portion 35 and the wall (e.g., the second wall W2). The wall (e.g., the second wall W2) supports the first portion 81.

According to an exemplary embodiment of the disclosure, the electronic device 3 may further include a battery 76 disposed on the support portion (e.g., the first support portion 71) between the support portion (e.g., the first support portion 71) and the rear plate 32. The wall (e.g., the second wall W2) may be positioned between the printed circuit board 510 and the battery 76. The wall (e.g., the second wall W2) may support the battery 76.

According to an exemplary embodiment of the disclosure, the support portion (e.g., the first support portion 71) may further include a non-conductive wall (e.g., the first wall W1) at least partially positioned between the non-conductive portion 35 and the first surface 511.

According to an exemplary embodiment of the disclosure, the electronic device 3 may further include a dielectric material of an adhesive material disposed between the non-conductive portion 35 and the non-conductive wall (e.g., the first wall W1).

According to an exemplary embodiment of the disclosure, the support portion (e.g., the first support portion 71) may include a fourth surface 720 connecting the wall (e.g., the second wall W2) and the non-conductive wall (e.g., the first wall W1). The printed circuit board 510 may be inserted into a recess R provided by a combination of the wall (e.g., the second wall W2), the non-conductive wall (e.g., the first wall W1), and the fourth surface 720. The support portion (the first support portion 71) may include a groove (e.g., the first groove 1101) provided in the fourth surface 720. The bracket (e.g., the antenna module bracket 8) may include an insert (e.g., the first insert 801) inserted into the groove (e.g., the first groove 1101).

Embodiments disclosed in the disclosure and drawings are merely presented as specific examples to easily describe technical content and aid understanding of the disclosure, and are not intended to limit the scope of the disclosure. Accordingly, the scope of the various embodiments of the disclosure should be construed as including changes or modifications of the embodiments in addition to the embodiments disclosed herein. **In** addition, it will be appreciated that any embodiment(s) described herein may be used with any other embodiment(s) described herein.

## Claims

1. An electronic device (3) comprising:
a front plate (31) configured to provide at least a portion of a front surface (30A) of the electronic device (3);
a rear plate (32) configured to provide at least a portion of a rear surface (30B) of the electronic device (3);
a side surface portion (33) configured to provide at least a portion of a side surface (30C) of the electronic device (3), wherein the side surface portion (33) comprises a conductive portion (A1) configured to provide a portion of the side surface (30C) and a non-conductive portion (35) configured to provide another portion of the side surface (30C);
a support portion (71) positioned between the front plate (31) and the rear plate (32) and connected to the side surface portion (33);
a printed circuit board (510) comprising a first surface (511) facing the non-conductive portion (35) and a second surface (512) facing away from the first surface (511);
at least one antenna element (521, 522, 523, 524, 525) disposed on the first surface (511) or disposed inside the printed circuit board (510) closer to the first surface (511) than to the second surface (512); and
a bracket (8) connecting the printed circuit board (510) and the support portion (71), wherein the bracket (8) comprises a first portion (81) on which the printed circuit board (510) is disposed, and a second portion (82) extending from the first portion (81) and fixed to the support portion (71) by a screw (S1),
wherein the support portion (71) comprises a wall (W2) protruding toward the rear plate (32),
wherein the printed circuit board (510) is positioned between the non-conductive portion (35) and the wall (W2), and
wherein the wall (W2) supports the first portion (81).

2. The electronic device of claim 1, further comprising:
a battery (76) disposed on the support portion (71) between the support portion (71) and the rear plate (32),
wherein the wall (W2) is positioned between the printed circuit board (510) and the battery (76), and
wherein the wall (W2) supports the battery (76).

3. The electronic device of claim 1 or 2, further comprising:
an adhesive member (1202) between the support portion (71) and the rear plate (32),
wherein the support portion (71) comprises a third surface (710) at least partially positioned along the side surface portion (33),
wherein the third surface (710) faces the rear plate (32),
wherein the third surface (710) comprises a first surface area (711) corresponding to the adhesive member (1202) and a second surface area (712) corresponding to the second portion (82), and
wherein the second portion (82) is fixed to the second surface area (712) by the screw (S1).

4. The electronic device of claim 3, wherein the first surface area (711) is positioned closer to the rear plate (32) than to the second surface area (712).

5. The electronic device of any one of claims 1 to 4, wherein the support portion (71) further comprises a non-conductive wall (W1) at least partially positioned between the non-conductive portion (35) and the first surface (511) and connected to the side surface portion (33).

6. The electronic device of claim 5, further comprising:
a first air gap (AG1) provided between the non-conductive wall (W1) and the first surface (511).

7. The electronic device of claim 5 or 6, further comprising:
a second air gap (AG2) provided between the non-conductive portion (35) and the non-conductive wall (W1).

8. The electronic device of claim 7, further comprising:
a dielectric material of an adhesive material disposed in the second air gap (AG2).

9. The electronic device of any one of claims 5 to 8, wherein the non-conductive wall (W1) comprises a recess into which the printed circuit board (510) is inserted.

10. The electronic device of one of claims 5 to 9, further comprising:
a first elastic member (1301) positioned between the non-conductive wall (W1) and the printed circuit board (510).

11. The electronic device of any one of claims 5 to 10, wherein the support portion (71) comprises a fourth surface (720) connecting the wall (W2) and the non-conductive wall (W1),
wherein the printed circuit board (510) is inserted into a recess (R) provided by a combination of the wall (W2), the non-conductive wall (W1), and the fourth surface (720),
wherein the support portion (71) comprises a groove (1101) provided in the fourth surface (720), and
wherein the bracket (8) comprises an insert (801) inserted into the groove (1101).

12. The electronic device of claim 11, wherein the insert (801) comprises a hemming structure.

13. The electronic device of one of claims 1 to 12, further comprising:
a second elastic member (1302) positioned between the first portion (81) and the wall (W2).

14. The electronic device of one of claims 1 to 13, further comprising:
a communication circuit (54) disposed on the second surface (512),
wherein the communication circuit (54) is configured to transmit and/or receive a mmWave wireless signal through the at least one antenna element (521, 522, 523, 524, 525).

15. The electronic device of one of claims 1 to 14, further comprising:
a heat-conductive material disposed between the bracket (8) and the support portion (71).
